# EUROPEAN PATENT APPLICATION

(11) **EP 3 882 882 A1**
(43) Date of publication of application: **22.09.2021**
(21) Application number: 19885471.3
(22) Date of filing: 05.11.2019
(51) Int. Cl.: G08G 1/16, H04N 5/235, H04N 7/18

(54) **INFRARED CAMERA SYSTEM, INFRARED CAMERA MODULE, AND VEHICLE**

(30) Priority: 14.11.2018 JP 2018213868; 14.11.2018 JP 2018213869; 14.11.2018 JP 2018213870; 14.11.2018 JP 2018213871; 14.11.2018 JP 2018213872; 14.11.2018 JP 2018213873; 14.11.2018 JP 2018213874
(71) Applicant: KOITO MANUFACTURING CO., LTD., Minato-ku Tokyo 108-8711 (JP)
(72) Inventor: MURAMATSU Takao, Shizuoka-shi, Shizuoka 424-8764 (JP); WATANABE Shigeyuki, Shizuoka-shi, Shizuoka 424-8764 (JP); SATO Masaaki, Shizuoka-shi, Shizuoka 424-8764 (JP); KUBOTA Akinobu, Shizuoka-shi, Shizuoka 424-8764 (JP)
(74) Representative: Cabinet Beau de Loménie
(86) International application number: PCT/JP2019/043311
(87) International publication number: WO 2020/100656

(57) **Abstract**

According to the present invention, a left infrared camera module (6L) provided to a vehicle is provided with: a left infrared emitting unit (22L) configured to emit infrared waves to the outside; and a left infrared camera (26L) configured to acquire infrared image data indicating the environment surrounding the vehicle. The left infrared emitting unit (22L) and the left infrared camera (26L) are mounted on a left C-pillar of the vehicle.

## Description

### TECHNICAL FIELD

The present disclosure relates to an infrared camera system, an infrared camera module, and a vehicle.

### BACKGROUND ART

Currently, research on automatic driving techniques of automobiles has been actively conducted in various countries, and each country considers legislation to allow a vehicle (hereinafter, the "vehicle" is referred to as "automobile") to travel on public roads in an automatic driving mode. Here, in the automatic driving mode, a vehicle system automatically controls traveling of the vehicle. Specifically, in the automatic driving mode, the vehicle system automatically performs at least one of steering control (control on an advancing direction of the vehicle), brake control, and accelerator control (control on braking, and acceleration or deceleration of the vehicle) based on information indicating a surrounding environment of the vehicle (surrounding environment information) acquired from a sensor such as a camera or a radar (for example, a laser radar or a millimeter wave radar). Meanwhile, in a manual driving mode to be described below, a driver controls traveling of the vehicle, as is cases of many related-art vehicles. Specifically, in the manual driving mode, the traveling of the vehicle is controlled according to an operation (a steering operation, a brake operation, and an accelerator operation) of the driver, and the vehicle system does not automatically perform the steering control, the brake control, and the accelerator control. A vehicle driving mode is not a concept that exists only in a part of vehicles, but a concept that exists in all vehicles including the related-art vehicles that do not have an automatic driving function, and the vehicle driving mode is classified according to, for example, a vehicle control method.

Thus, it is expected in the future that vehicles traveling in an automatic driving mode (hereinafter, refers to as "automatic driving vehicle" as appropriate) and vehicles traveling in a manual driving mode (hereinafter, referred to as "manual driving vehicle" as appropriate) coexist on the public road.

As an example of the automatic driving technique, Patent Literature 1 discloses an automatic following travel system in which a following vehicle automatically follows a preceding vehicle. In the automatic following travel system, each of the preceding vehicle and the following vehicle includes a lighting system, and character information for preventing another vehicle from interrupting between the preceding vehicle and the following vehicle is displayed on the lighting system of the preceding vehicle, and character information indicating that the vehicle is in the automatic following traveling is displayed on the lighting system of the following vehicle.

### CITATION LIST

### PATENT LITERATURE

Patent Literature 1: JPH09-277887A

### SUMMARY OF INVENTION

### TECHNICAL PROBLEM

With the development of the automatic driving technique, it is necessary to dramatically increase a recognition range of the vehicle with respect to a surrounding environment. In this regard, mounting a plurality of different types of sensors (for example, a camera, a LiDAR unit, a millimeter wave radar, and the like) on a vehicle is currently being studied. For example, mounting a LiDAR unit and a visible light camera on each of a front surface and a rear surface of a vehicle is currently being studied. Further, in order to increase a recognition range of the vehicle with respect to the surrounding environment in a lateral region of the vehicle, it is considered to mount a LiDAR unit and a visible light camera on each of a left side and a right side of the vehicle.

The recognition range of the vehicle with respect to the surrounding environment is improved as the number of sensors mounted on the vehicle increases, but a price of the vehicle is dramatically increased. In particular, since a unit price of the LiDAR unit is high, the price of the vehicle increases dramatically as the number of LiDAR units mounted on the vehicle increases.

In order to solve this problem, it is considered to mount only the visible light cameras on the left side and the right side of the vehicle. Meanwhile, when the vehicle is traveling at night, it is necessary to emit visible light toward the lateral region of the vehicle in order to acquire, by the visible light cameras, image data indicating the surrounding environment in the lateral region of the vehicle. However, when visible light is emitted toward the lateral region of the vehicle, a great sense of discomfort may be given to other vehicles, pedestrians, and the like. Therefore, when the vehicle is traveling at night, it is practically difficult to emit visible light toward the lateral region of the vehicle, and thus it is difficult to detect the surrounding environment of the lateral region of the vehicle using the visible light cameras mounted on the left side surface and the right side surface of the vehicle. From the above viewpoint, there is a room for further improvement of the sensing system of the vehicle.

An object of the present disclosure is to provide an infrared camera system or an infrared camera module capable of detecting a surrounding environment in a lateral region of a vehicle without giving a great sense of discomfort to other vehicles, pedestrians, and the like.

### SOLUTION TO PROBLEM

An infrared camera system according to an aspect of the present disclosure is provided in a vehicle, and includes: an infrared emitting unit configured to emit infrared rays toward an outside; and an infrared camera configured to acquire infrared image data indicating a surrounding environment of the vehicle. The infrared emitting unit and the infrared camera are mounted on a rear pillar of the vehicle.

According to the above configuration, even when a traveling environment of the vehicle is dark, the surrounding environment in a lateral region of the vehicle can be detected using the infrared camera mounted on the rear pillar of the vehicle. Further, since the infrared rays rather than visible light are emitted toward the outside as light for the infrared camera, a situation in which a great sense of discomfort is given to other vehicles, pedestrians, and the like can be prevented. Therefore, an infrared camera system capable of detecting a surrounding environment in a lateral region of the vehicle without giving a great sense of discomfort to other vehicles, pedestrians, and the like can be provided.

Further, since the infrared camera is mounted on the rear pillar, dirt is less likely to adhere to the infrared camera. Therefore, it is not necessary to separately provide a cleaner device for cleaning the infrared camera, so that the manufacturing cost of the infrared camera system can be reduced. Further, since the infrared camera is less likely to be defective due to the adhesion of dirt, the reliability of the infrared camera can be improved.

The infrared emitting unit and the infrared camera may be mounted on a C-pillar of the vehicle.

An optical axis of the infrared emitting unit and an optical axis of the infrared camera may be substantially parallel to each other.

According to the above configuration, since the optical axis of the infrared emitting unit and the optical axis of the infrared camera are substantially parallel to each other, shortage of an amount of infrared rays in a detection region of the infrared camera can be suitably prevented.

The infrared camera system may further include a visible light camera configured to acquire visible light image data indicating a surrounding environment of the vehicle.

According to the above configuration, the surrounding environment in the lateral region of the vehicle can be detected using the visible light camera when the traveling environment of the vehicle is bright, and the surrounding environment in the lateral region of the vehicle can be detected using the infrared camera when the traveling environment of the vehicle is dark. In this way, the surrounding environment in the lateral region of the vehicle can be detected without depending on the brightness of the traveling environment of the vehicle.

The visible light camera and the infrared camera may be configured integrally.

According to the above configuration, since the infrared camera and the visible light camera are configured integrally, the number of devices constituting the infrared camera system can be reduced.

The infrared emitting unit may include a left infrared emitting unit mounted on a left rear pillar of the vehicle and a right infrared emitting unit mounted on a right rear pillar of the vehicle. The infrared camera may include a left infrared camera mounted on the left rear pillar and a right infrared camera mounted on the right rear pillar.

According to the above configuration, even when the traveling environment of the vehicle is dark, the surrounding environment in the left side region of the vehicle can be detected using the left infrared camera, and the surrounding environment in the right side region of the vehicle can be detected using the right infrared camera. Therefore, an infrared camera system capable of detecting the surrounding environment in the left side region and right side region of the vehicle without giving a great sense of discomfort to other vehicles, pedestrians, and the like can be provided.

A vehicle including the above infrared camera system may be provided.

According to the above, a vehicle capable of detecting the surrounding environment in the lateral region of the vehicle without giving a great sense of discomfort to other vehicles, pedestrians, and the like can be provided.

An infrared camera module according to an aspect of the present disclosure is provided in a vehicle, and includes: a housing having an opening portion; a cover configured to cover the opening portion; an infrared emitting unit configured to emit infrared rays toward a lateral region of the vehicle; an infrared camera configured to acquire infrared image data indicating a surrounding environment in the lateral region of the vehicle; and a control unit configured to control operations of the infrared emitting unit and the infrared camera. The infrared emitting unit and the infrared camera are disposed in a space formed by the housing and the cover.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the lateral region of the vehicle as light for the infrared camera, a situation in which a great sense of discomfort is given to other vehicles, pedestrians, and the like can be prevented. Therefore, an infrared camera module capable of detecting a surrounding environment in a lateral region of the vehicle without giving a great sense of discomfort to other vehicles, pedestrians, and the like can be provided.

The housing and the cover may be disposed on a rear pillar of the vehicle.

According to the above configuration, since the housing and the cover are mounted on the rear pillar, dirt is less likely to adhere to an outer surface of the infrared camera disposed in the space formed by the housing and the cover. Therefore, it is not necessary to separately provide a cleaner device for cleaning the infrared camera, so that the manufacturing cost of the infrared camera module can be reduced. Further, since the infrared camera is less likely to be defective due to the adhesion of dirt, the reliability of the infrared camera can be improved.

The control unit may be disposed in the space.

According to the above configuration, since the infrared camera, the infrared emitting unit, and the control unit are housed in one space, the infrared camera module can be easily attached to the vehicle.

The space may include a first space and a second space separated from the first space. The infrared emitting unit may be disposed in the first space. The infrared camera may be disposed in the second space.

According to the above configuration, since the infrared emitting unit is disposed in the first space and the infrared camera is disposed in the second space, the infrared rays emitted from the infrared emitting unit can be suitably prevented from directly entering the infrared camera. In this way, the reliability of the infrared image data acquired by the infrared camera can be improved.

A hydrophilic coating layer or a water-repellent coating layer may be formed on an outer surface of the cover.

According to the above configuration, in a case where the water-repellent coating layer is formed on the outer surface of the cover, water droplets can be suitably prevented from adhering to the outer surface of the cover. Therefore, since the water droplets are suitably prevented from being reflected on the infrared camera, the reliability of the infrared image data acquired by the infrared camera can be improved. In a case where the hydrophilic coating layer is formed on the outer surface of the cover, a water spot is suitably prevented from being formed on the outer surface of the cover. Therefore, since the water spot is suitably prevented from being reflected on the infrared camera, the reliability of the infrared image data acquired by the infrared camera can be improved.

An infrared camera module according to an aspect of the present disclosure is provided in a vehicle, and includes: an emblem of the vehicle; an infrared emitting unit configured to emit infrared rays toward a lateral region of the vehicle; and an infrared camera configured to acquire infrared image data indicating a surrounding environment in the lateral region of the vehicle.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the lateral region of the vehicle as light for the infrared camera, a situation in which a great sense of discomfort is given to other vehicles, pedestrians, and the like can be prevented. Therefore, an infrared camera module capable of detecting a surrounding environment in a lateral region of the vehicle without giving a great sense of discomfort to other vehicles, pedestrians, and the like can be provided.

Further, in a case where light in a red wavelength band is contained the infrared rays (near-infrared rays) emitted from the infrared emitting unit, an occupant of another vehicle, a pedestrian and the like existing outside the vehicle recognizes the emitted infrared rays as reddish light. Meanwhile, the pedestrian and the like pays more attention to the emblem than to the infrared rays (reddish light) emitted from the infrared emitting unit. Therefore, the emblem can suitably prevent the pedestrian and the like from feeling a great sense of discomfort with respect to the infrared rays (reddish light).

The infrared camera module may further include a housing having an opening portion; and a cover configured to cover the opening portion. The infrared emitting unit and the infrared camera may be disposed in a space formed by the housing and the cover. The emblem may be disposed on an outer surface of the cover.

According to the above configuration, the infrared emitting unit and the infrared camera are disposed in the space formed by the housing and the cover, and the emblem is disposed on the outer surface of the cover. Therefore, the pedestrian and the like pays more attention to the emblem disposed on the outer surface of the cover than to the infrared rays (reddish light) emitted from the infrared emitting unit. In this way, the emblem can suitably prevent the pedestrian and the like from feeling a great sense of discomfort with respect to the infrared rays (reddish light).

The housing and the cover may be disposed on a rear pillar of the vehicle.

According to the above configuration, since the housing and the cover are mounted on the rear pillar, dirt is less likely to adhere to an outer surface of the infrared camera disposed in the space formed by the housing and the cover. Therefore, it is not necessary to separately provide a cleaner device for cleaning the infrared camera, so that the manufacturing cost of the infrared camera module can be reduced. Further, since the infrared camera is less likely to be defective due to the adhesion of dirt, the reliability of the infrared camera can be improved.

The space may include a first space and a second space separated from the first space. The infrared emitting unit may be disposed in the first space. The infrared camera may be disposed in the second space.

According to the above configuration, since the infrared emitting unit is disposed in the first space and the infrared camera is disposed in the second space, the infrared rays emitted from the infrared emitting unit can be suitably prevented from directly entering the infrared camera. In this way, the reliability of the infrared image data acquired by the infrared camera can be improved.

An infrared camera system according to an aspect of the present disclosure is provided in a vehicle, and includes: an infrared emitting unit configured to emit infrared rays toward a lateral region of the vehicle; and an infrared camera configured to acquire infrared image data indicating a surrounding environment in the lateral region of the vehicle. An emitting distance of infrared rays emitted from the infrared emitting unit is longer than a detection distance of the infrared camera.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the outside as light for the infrared camera, a situation in which a great sense of discomfort is given to other vehicles, pedestrians, and the like can be prevented. Therefore, an infrared camera system capable of detecting a surrounding environment in a lateral region of the vehicle without giving a great sense of discomfort to other vehicles, pedestrians, and the like can be provided.

Further, since the emitting distance of the infrared rays emitted from the infrared emitting unit is longer than the detection distance of the infrared camera, the infrared camera can reliably capture an object existing within the detection range of the infrared camera. In other words, the vehicle can reliably specify the surrounding environment within the detection range of the infrared camera based on the infrared image data.

The infrared camera may be mounted on a rear pillar of the vehicle.

According to the above configuration, since the infrared camera is mounted on the rear pillar, dirt is less likely to adhere to the infrared camera. Therefore, it is not necessary to separately provide a cleaner device for cleaning the infrared camera, so that the manufacturing cost of the infrared camera system can be reduced. Further, since the infrared camera is less likely to be defective due to the adhesion of dirt, the reliability of the infrared camera can be improved.

The infrared emitting unit may include a left infrared emitting unit mounted on a left rear pillar of the vehicle and a right infrared emitting unit mounted on a right rear pillar of the vehicle. The infrared camera may include a left infrared camera mounted on the left rear pillar and a right infrared camera mounted on the right rear pillar. An emitting distance of infrared rays emitted from the left infrared emitting unit may be longer than a detection distance of the left infrared camera. An emitting distance of infrared rays emitted from the right infrared emitting unit may be longer than a detection distance of the right infrared camera.

According to the above configuration, since the emitting distance of the infrared rays emitted from the left infrared emitting unit is longer than the detection distance of the left infrared camera, the left infrared camera can reliably capture an object existing within the detection range of the left infrared camera. Further, since the emitting distance of the infrared rays emitted from the right infrared emitting unit is longer than the detection distance of the right infrared camera, the right infrared camera can reliably capture an object existing within the detection range of the right infrared camera. Therefore, an infrared camera system capable of reliably detecting the surrounding environment in a left side region and right side region of the vehicle without giving a great sense of discomfort to other vehicles, pedestrians, and the like can be provided.

An infrared camera system according to an aspect of the present disclosure is provided in a vehicle, and includes: an infrared emitting unit configured to emit infrared rays toward a lateral region of the vehicle; an infrared camera configured to acquire infrared image data indicating a surrounding environment in the lateral region of the vehicle; and a control unit configured to control an operation of the infrared emitting unit. The control unit is configured to turn off the infrared emitting unit in response to an abnormality of the infrared camera.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the lateral region of the vehicle as light for the infrared camera, a situation in which a great sense of discomfort is given to other vehicles, pedestrians, and the like can be prevented. Therefore, an infrared camera system capable of detecting a surrounding environment in a lateral region of the vehicle without giving a great sense of discomfort to other vehicles, pedestrians, and the like can be provided.

Further, when the vehicle is traveling in the automatic driving mode, the surrounding environment of the vehicle is specified using detection data from various sensors, and thus the power consumption of the vehicle increases dramatically. In this regard, in the present invention, since the infrared emitting unit is turned off when the infrared camera has an abnormality, wasteful power consumption of the infrared emitting unit can be prevented, and power consumption of the whole vehicle can be reduced.

An infrared camera system according to an aspect of the present disclosure is provided in a vehicle, and includes: an infrared emitting unit configured to emit infrared rays toward a lateral region of the vehicle; an infrared camera configured to acquire infrared image data indicating a surrounding environment in the lateral region of the vehicle; and a control unit configured to control an operation of the infrared emitting unit. The control unit is configured to change, according to a traveling speed of the vehicle or a speed limit of a road on which the vehicle is traveling, an intensity of infrared rays emitted from the infrared emitting unit.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the lateral region of the vehicle as light for the infrared camera, a situation in which a great sense of discomfort is given to other vehicles, pedestrians, and the like can be prevented. Therefore, an infrared camera system capable of detecting a surrounding environment in a lateral region of the vehicle without giving a great sense of discomfort to other vehicles, pedestrians, and the like can be provided.

Further, since the intensity of the infrared rays emitted from the infrared emitting unit is changed according to the traveling speed of the vehicle or the speed limit of the road on which the vehicle is traveling, the surrounding environment in the detection range of the infrared camera can be reliably detected.

The control unit may be configured to increase the intensity of the infrared rays emitted from the infrared emitting unit when the vehicle enters a highway from a general road. A speed limit of the highway may be higher than a speed limit of the general road.

According to the above configuration, when the vehicle enters the highway from the general road, the intensity of the infrared rays emitted from the infrared emitting unit is increased. Therefore, the vehicle can reliably detect an object such as another vehicle that suddenly approaches the vehicle while the vehicle is traveling on a highway.

The infrared camera may include a left infrared camera configured to acquire infrared image data indicating a surrounding environment in a left side region of the vehicle, and a right infrared camera configured to acquire infrared image data indicating a surrounding environment in a right side region of the vehicle. An optical axis of the left infrared camera may be directed to a left rear direction of the vehicle. An optical axis of the right infrared camera may be directed to a right rear direction of the vehicle.

According to the above configuration, the optical axis of the left infrared camera is directed to the left rear direction of the vehicle, and the optical axis of the right infrared camera is directed to the right rear direction of the vehicle. Therefore, the vehicle can reliably detect an object such as a rear vehicle that suddenly approaches the vehicle from behind the vehicle while the vehicle is traveling on a highway.

The control unit may be configured to increase the intensity of the infrared rays emitted from the infrared emitting unit when a traveling speed of the vehicle is equal to or higher than a predetermined speed.

According to the above configuration, when the traveling speed of the vehicle is equal to or higher than the predetermined speed, the intensity of the infrared rays emitted from the infrared emitting unit is increased. In this way, the vehicle can reliably detect an object such as a pedestrian or another vehicle that suddenly approaches the vehicle while the vehicle is traveling at a traveling speed equal to or higher than the predetermined speed.

The infrared camera may include a left infrared camera configured to acquire infrared image data indicating a surrounding environment in a left side region of the vehicle, and a right infrared camera configured to acquire infrared image data indicating a surrounding environment in a right side region of the vehicle. An optical axis of the left infrared camera may be directed to a left front direction of the vehicle. An optical axis of the right infrared camera may be directed to a right front direction of the vehicle.

According to the above configuration, the optical axis of the left infrared camera is directed to the left front direction of the vehicle, and the optical axis of the right infrared camera is directed to the right front direction of the vehicle. In this way, the vehicle can reliably detect an object such as a pedestrian in front of the vehicle or another preceding vehicle that suddenly approaches the vehicle while the vehicle is traveling at a traveling speed equal to or higher than the predetermined speed.

An infrared camera system according to an aspect of the present disclosure is provided in a vehicle, and includes: an infrared emitting unit configured to emit infrared laser toward a lateral region of the vehicle; and an infrared camera configured to acquire infrared image data indicating a surrounding environment in the lateral region of the vehicle.

According to the above configuration, even when a traveling environment of the vehicle is dark, the surrounding environment in the lateral region of the vehicle can be detected using the infrared camera mounted on the vehicle. Further, since the infrared rays rather than visible light are emitted toward the lateral region of the vehicle as light for the infrared camera, a situation in which a great sense of discomfort is given to other vehicles, pedestrians, and the like can be prevented. Therefore, an infrared camera system capable of detecting a surrounding environment in a lateral region of the vehicle without giving a great sense of discomfort to other vehicles, pedestrians, and the like can be provided.

In a case where an infrared LED is used as an infrared light source, light in a red wavelength band is contained in the infrared rays, so that an occupant of another vehicle, a pedestrian and the like existing outside the vehicle may recognize the emitted infrared rays as reddish light. In contrast, in the present invention, since light in the red wavelength band is not contained in the infrared laser emitted from the infrared emitting unit at all, a pedestrian and the like does not recognize the emitted infrared laser as reddish light. Therefore, a pedestrian and the like can be suitably prevented from feeling a great sense of discomfort with respect to the infrared emitting unit.

The infrared camera may be mounted on a rear pillar of the vehicle.

According to the above configuration, since the infrared camera is mounted on the rear pillar, dirt is less likely to adhere to an outer surface of the infrared camera. Therefore, it is not necessary to separately provide a cleaner device for cleaning the infrared camera, so that the manufacturing cost of the infrared camera system can be reduced. Further, since the infrared camera is less likely to be defective due to the adhesion of dirt, the reliability of the infrared camera can be improved.

The infrared emitting unit may include an infrared laser light source configured to emit infrared laser, and an optical member configured to diffuse infrared laser emitted from the infrared laser light source toward an outside.

According to the above configuration, the infrared laser emitted from the infrared laser light source can be suitably diffused toward the outside by the optical member. In this way, the emitting range of the infrared laser can be adjusted by the optical member.

The optical member may include a diffusion reflector.

According to the above configuration, the infrared laser emitted from the infrared laser light source can be suitably diffused toward the outside by the diffusion reflector. In this way, the emitting range of the infrared laser can be adjusted by the diffusion reflector.

The optical member may include a diffusion lens having a plurality of steps, and a projection lens disposed between the infrared laser light source and the diffusion lens.

According to the above configuration, the infrared laser emitted from the infrared laser light source can be suitably diffused toward the outside by the diffusion lens and the projection lens. In this way, the emitting range of the infrared laser can be adjusted by the diffusion lens and the projection lens.

A vehicle including the above infrared camera system may be provided. Further, a vehicle including the above infrared camera module may be provided.

### ADVANTAGEOUS EFFECTS OF INVENTION

According to the present disclosure, an infrared camera system or an infrared camera module capable of detecting a surrounding environment in a lateral region of a vehicle without giving a great sense of discomfort to other vehicles, pedestrians, and the like can be provided.

### BRIEF DESCRIPTION OF DRAWINGS

FIG. 1 is a top view of a vehicle on which a vehicle system according to a first embodiment of the present invention is mounted.
FIG. 2 is a block diagram of the vehicle system according to the first embodiment.
FIG. 3A shows a left side view of the vehicle and an enlarged front view of a left infrared camera module. FIG. 3B shows a cross-sectional view of the left infrared camera module.
FIG. 4 is a diagram showing an optical axis of a left infrared emitting unit, an optical axis of a left infrared camera, an optical axis of a right infrared emitting unit, and an optical axis of a right infrared camera.
FIG. 5A is a diagram showing an emitting range and an emitting distance of infrared rays emitted from the left infrared emitting unit, and a detection range and a detection distance of the left infrared camera. FIG. 5B is a diagram showing an emitting range and an emitting distance of infrared rays emitted from the right infrared emitting unit, and a detection range and a detection distance of the right infrared camera.
FIG. 6 is a flowchart illustrating a process of turning off the left infrared emitting unit in response to an abnormality of the left infrared camera.
FIG. 7 is a flowchart illustrating a process of setting an intensity of infrared rays according to a road on which the vehicle is currently traveling.
FIG. 8 is a diagram showing an optical axis of the left infrared camera that is directed to a left rear direction of the vehicle and an optical axis of the right infrared camera that is directed to a right rear direction of the vehicle.
FIG. 9 is a diagram showing a vehicle and another vehicle that suddenly approaches the vehicle from behind.
FIG. 10 is a flowchart illustrating a process of setting an intensity of infrared rays according to a traveling speed of the vehicle.
FIG. 11 is a diagram showing an optical axis of the left infrared camera that is directed to a left front direction of the vehicle and an optical axis of the right infrared camera that is directed to a right front direction of the vehicle.
FIG. 12 is a diagram showing a vehicle and a pedestrian in front of the vehicle who suddenly approaches the vehicle.
FIG. 13 is a top view of a vehicle on which a vehicle system according to a second embodiment of the present invention is mounted.
FIG. 14 is a block diagram of the vehicle system according to the second embodiment.
FIG. 15A shows a left side view of the vehicle and an enlarged front view of a left infrared camera module. FIG. 15B shows a cross-sectional view of the left infrared camera module.
FIG. 16 is a cross-sectional view of a left infrared camera module according to a modification of the second embodiment.

### DESCRIPTION OF EMBODIMENTS

### (First Embodiment)

Hereinafter, a first embodiment of the present invention (hereinafter, referred to as the present embodiment) will be described with reference to the drawings. Dimensions of members shown in the drawings may be different from actual dimensions of the members for convenience of description.

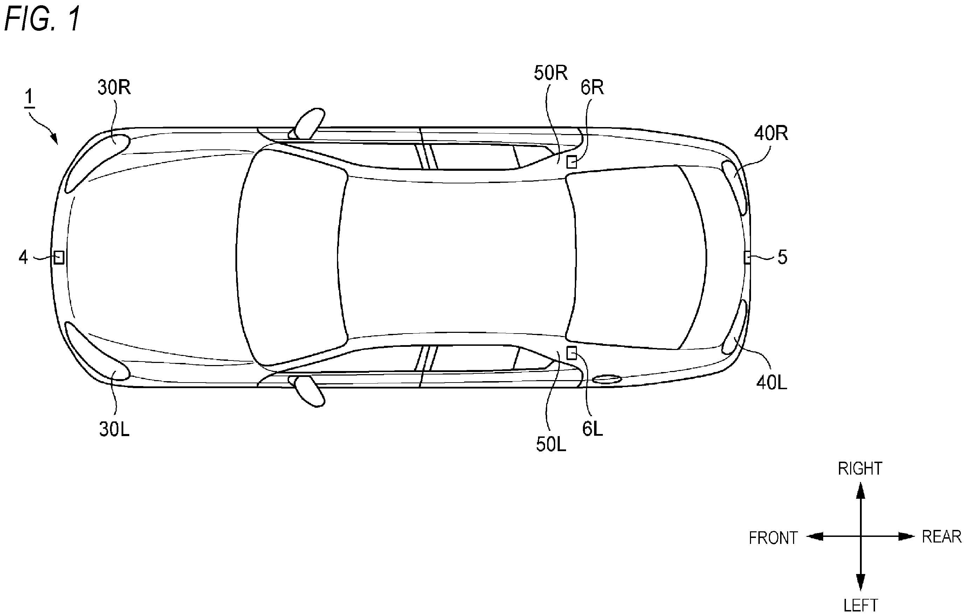

In description of the present embodiment, a "left-right direction", an "upper-lower direction" and a "front-rear direction" may be appropriately referred to, for convenience of description. These directions are relative directions set for a vehicle 1 shown in FIG. 1. Here, the "left-right direction" is a direction including a "left direction" and a "right direction". The "upper-lower direction" is a direction including an "upper direction" and a "lower direction". The "front-rear direction" is a direction including a "front direction" and a "rear direction". Although not shown in FIG. 1, the upper-lower direction is a direction orthogonal to the left-right direction and the front-rear direction.

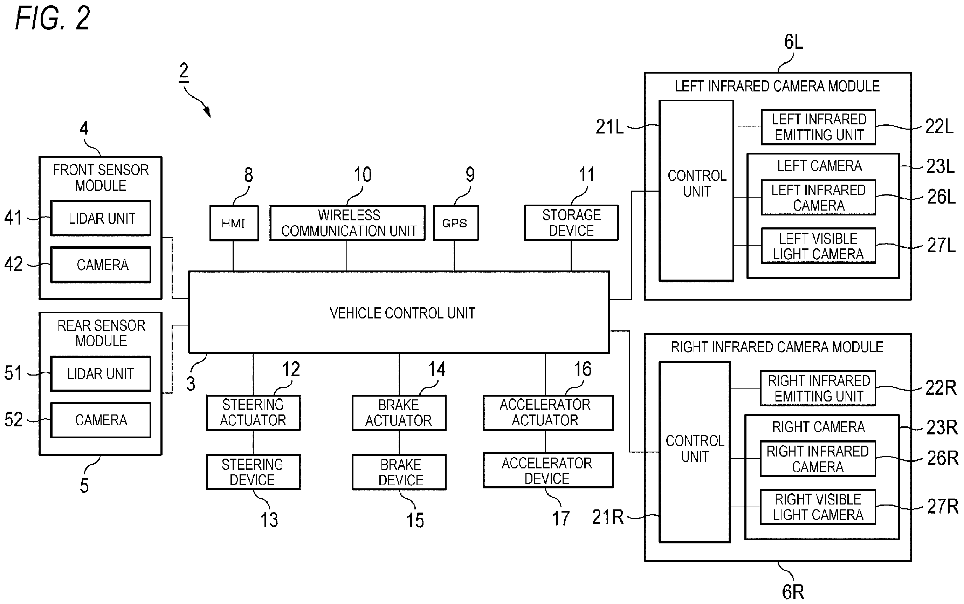

First, a vehicle system 2 according to the present embodiment will be described below with reference to FIGS. 1 and 2. FIG. 1 is a top view of the vehicle 1 provided with the vehicle system 2. FIG. 2 is a block diagram of the vehicle system 2. The vehicle 1 is a vehicle (an automobile) capable of traveling in an automatic driving mode.

As shown in FIG. 2, the vehicle system 2 includes a vehicle control unit 3, a front sensor module 4, a rear sensor module 5, a left infrared camera module 6L, and a right infrared camera module 6R. Further, the vehicle system 2 includes a human machine interface (HMI) 8, a global positioning system (GPS) 9, a wireless communication unit 10 and a storage device 11. Further, the vehicle system 2 includes a steering actuator 12, a steering device 13, a brake actuator 14, a brake device 15, an accelerator actuator 16, and an accelerator device 17.

The vehicle control unit 3 is configured to control the traveling of the vehicle 1. The vehicle control unit 3, for example, is configured with at least one electronic control unit (ECU). The electronic control unit includes a computer system (for example, a system on a chip (SoC)) including one or more processors and one or more memories; and an electronic circuit including a passive element and an active element such as a transistor. The processor includes, for example, at least one of a central processing unit (CPU), a micro processing unit (MPU), a graphics processing unit (GPU) and a tensor processing unit (TPU). The CPU may be configured with a plurality of CPU cores. The GPU may be configured with a plurality of GPU cores. The memory includes a read only memory (ROM) and a random access memory (RAM). The ROM may store a vehicle control program. For example, the vehicle control program may include an artificial intelligence (AI) program for automatic driving. The AI program is a program (a trained model) constructed by supervised or unsupervised machine learning (in particular, deep learning) using a multilayer neural network. The RAM may temporarily store a vehicle control program, vehicle control data, and/or surrounding environment information indicating a surrounding environment of the vehicle. The processor may be configured to load a program designated from various vehicle control programs stored in the ROM onto the RAM and execute various processes in cooperation with the RAM. Further, the computer system may be configured with a non-von Neumann computer such as an application specific integrated circuit (ASIC) or a field-programmable gate array (FPGA). Further, the computer system may be configured with a combination of a Neumann computer and a non-von Neumann computer.

The front sensor module 4 includes a LiDAR unit 41 and a camera 42. The LiDAR unit 41 is configured to acquire 3D mapping data (point cloud data) indicating a surrounding environment in a front region of the vehicle 1 and then transmit the acquired 3D mapping data to the vehicle control unit 3. The vehicle control unit 3 is configured to specify, based on the received 3D mapping data, information (hereinafter referred to as "surrounding environment information") indicating the surrounding environment in the front region. The surrounding environment information may include information related to an object existing outside the vehicle 1. For example, the surrounding environment information may include information related to an attribute of the object existing outside the vehicle 1 and information related to a distance or position of the object with respect to the vehicle 1. The camera 42 is configured to acquire image data indicating a surrounding environment in the front region of the vehicle 1 and then transmit the acquired image data to the vehicle control unit 3. The vehicle control unit 3 is configured to specify the surrounding environment information in the front region based on the received image data.

A detection region of the LiDAR unit 41 and a detection region of the camera 42 may at least partially overlap each other. The front sensor module 4 is disposed at a predetermined position on a front surface of the vehicle 1. For example, the front sensor module 4 may be disposed in a front grille or a front bumper, or may be disposed inside a left headlamp 30L and/or a right headlamp 30R. When the vehicle 1 includes two front sensor modules 4, one front sensor module 4 may be disposed inside the left headlamp 30L, and the other front sensor module 4 may be disposed inside the right headlamp 30R.

The rear sensor module 5 includes a LiDAR unit 51 and a camera 52. The LiDAR unit 51 is configured to acquire 3D mapping data (point cloud data) indicating a surrounding environment in a rear region of the vehicle 1 and then transmit the acquired 3D mapping data to the vehicle control unit 3. The vehicle control unit 3 is configured to specify the surrounding environment information in the rear region based on the received 3D mapping data. The camera 52 is configured to acquire image data indicating the surrounding environment in the rear region of the vehicle 1 and then transmit the acquired image data to the vehicle control unit 3. The vehicle control unit 3 is configured to specify the surrounding environment information in the rear region based on the received image data.

A detection region of the LiDAR unit 51 and a detection region of the camera 52 may at least partially overlap each other. The rear sensor module 5 is disposed at a predetermined position on a rear surface of the vehicle 1. For example, the rear sensor module 5 may be disposed on a rear grille or a rear bumper, or may be disposed inside a left headlamp 40L and/or a right headlamp 40R. When the vehicle 1 includes two rear sensor modules 5, one front sensor module 5 may be disposed inside the left headlamp 40L, and the other front sensor module 5 may be disposed on the right headlamp 40R.

The left infrared camera module 6L (an example of a left infrared camera system) is mounted on a left C-pillar 50L (an example of a left rear pillar) of the vehicle 1, and includes a left infrared emitting unit 22L, a left camera 23L, and a control unit 21L. The left camera 23L includes a left infrared camera 26L and a left visible light camera 27L.

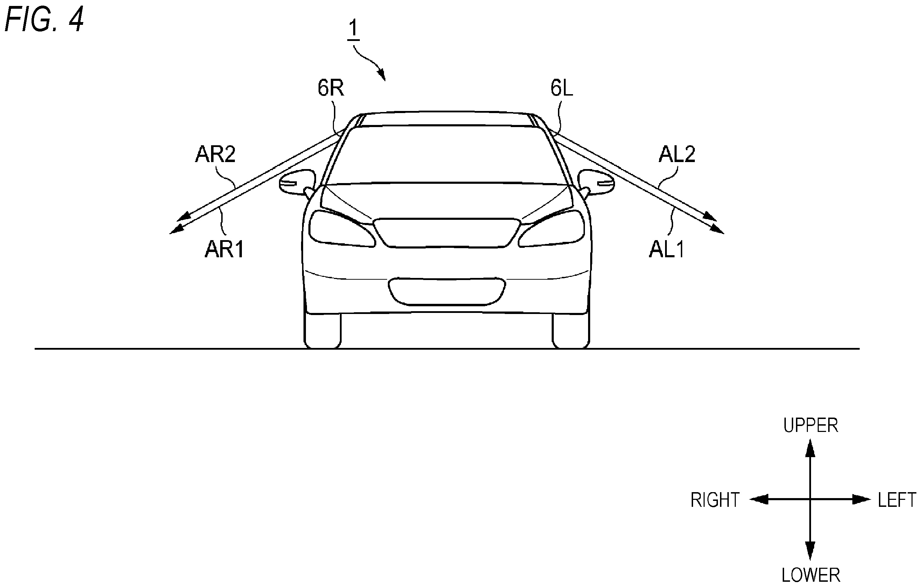

The left infrared emitting unit 22L is configured to emit infrared rays (in particular, near-infrared rays) toward a left side region of the vehicle 1. A wavelength band of the infrared rays emitted from the left infrared emitting unit 22L is, for example, in a range of 700 nm to 2500 nm. Further, a peak wavelength of the infrared rays is, for example, 850 nm, 940 nm, or 1050 nm. The left infrared camera 26L is configured to acquire infrared image data indicating the surrounding environment in the left side region of the vehicle 1. The left visible light camera 27L is configured to acquire visible light image data indicating the surrounding environment in the left side region of the vehicle 1. For example, when each of RGB elements of one pixel of the visible light image data has a data amount of eight bits, the visible light image data has a data amount of 24 bits per pixel. The vehicle control unit 3 or the control unit 21L is configured to specify the surrounding environment information in the left side region based on the infrared image data and/or the visible light image data. As shown in FIG. 4, an optical axis AL1 of the left infrared emitting unit 22L and an optical axis AL2 of the left infrared camera 26L may be substantially parallel to each other. In this case, shortage of an amount of infrared rays in the detection region of the left infrared camera 26L can be suitably prevented.

Further, the left infrared camera 26L and the left visible light camera 27L may be configured integrally or may be configured separately. When the left infrared camera 26L and the left visible light camera 27L are configured integrally, a color filter array (CFA) in which RGB color filters and infrared filters are arranged in an array may be used in the left camera 23L. When the left infrared camera 26L and the left visible light camera 27L are configured integrally, the number of devices constituting the left infrared camera module 6L can be reduced.

The control unit 21L is configured to control an operation of the left infrared emitting unit 22L and operations of the left infrared camera 26L and the left visible light camera 27L. The control unit 21L includes a computer system (for example, a SoC) including one or more processors and one or more memories, and an electronic circuit including a passive element and an active element such as a transistor. The processor includes at least one of a CPU, an MPU, a GPU, and a TPU. The memory includes a ROM and a RAM. Further, the computer system may be configured with a non-von Neumann computer such as an ASIC or an FPGA.

For example, in a case where it is determined that a traveling environment of the vehicle 1 is bright based on illuminance data acquired from an illuminance sensor (not illustrated) mounted on the vehicle 1 (specifically, in a case where measured illuminance is larger than threshold illuminance), the control unit 21L may operate only the left visible light camera 27L in the left camera 23L. Meanwhile, in a case where it is determined that the traveling environment of the vehicle 1 is dark based on the illuminance data (specifically, in a case where the measured illuminance is equal to or less than the threshold illuminance), the control unit 21L may operate only the left infrared camera 26L in the left camera 23L. In this case, the control unit 21L may turn on the left infrared emitting unit 22L. In this way, the surrounding environment information in the left side region of the vehicle 1 can be specified without depending on the brightness of the traveling environment of the vehicle 1.

The left infrared camera module 6L may be disposed on the left rear pillar (for example, a left D-pillar) other than the left C-pillar 50L. In the present embodiment, the left infrared camera system is configured as the left infrared camera module 6L, but the present embodiment is not limited thereto. In this regard, the left infrared camera system may not be packaged as one module. In this case, a configuration of the left infrared camera system is not particularly limited as long as the left infrared emitting unit 22L and the left infrared camera 26L are disposed on the left rear pillar (for example, the left C-pillar 50L) of the vehicle 1. Further, the control unit 21L may be configured integrally with the control unit 21R and/or the vehicle control unit 3.

The right infrared camera module 6R (an example of a right infrared camera system) is mounted on a right C-pillar 50R (an example of a right rear pillar) of the vehicle 1, and includes a right infrared emitting unit 22R, a right camera 23R, and a control unit 21R. The right camera 23R includes a right infrared camera 26R and a right visible light camera 27R.

The right infrared emitting unit 22R is configured to emit infrared rays (near-infrared rays) toward a right side region of the vehicle 1. A wavelength band of the infrared rays emitted from the right infrared emitting unit 22R is, for example, in a range of 700 nm to 2500 nm. Further, a peak wavelength of the infrared rays is, for example, 850 nm, 940 nm, or 1050 nm. The right infrared camera 26R is configured to acquire infrared image data indicating a surrounding environment in the right side region of the vehicle 1. The right visible light camera 27R is configured to acquire visible light image data indicating the surrounding environment of the right side region of the vehicle 1. The vehicle control unit 3 or the control unit 21R is configured to specify the surrounding environment information in the right side region based on the infrared image data and/or the visible light image data. As shown in FIG. 4, an optical axis AR1 of the right infrared emitting unit 22R and an optical axis AR2 of the right infrared camera 26R may be substantially parallel to each other. In this case, shortage of an amount of infrared rays in the detection region of the right infrared camera 26R can be suitably prevented.

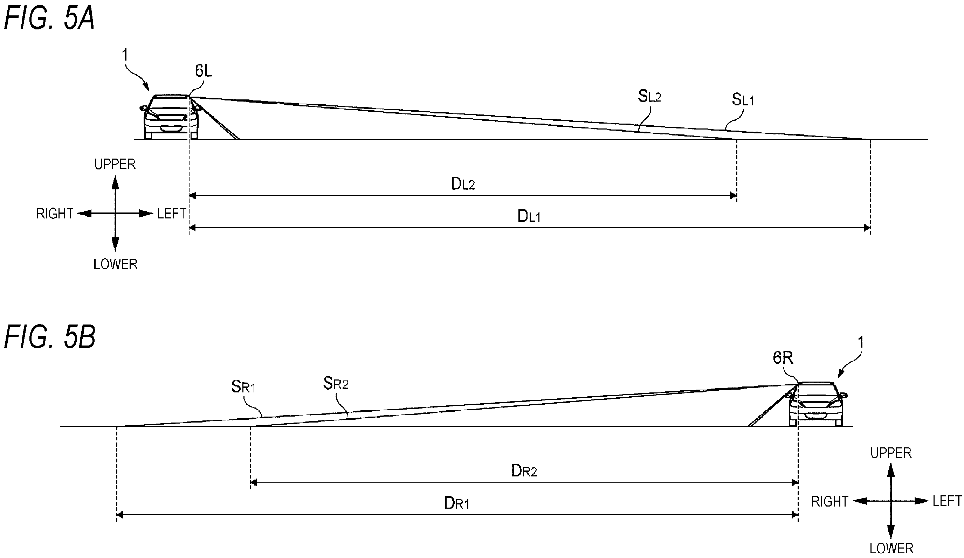

As shown in FIG. 5B, an emitting distance D_{R1} of the infrared rays emitted from the right infrared emitting unit 22R may be longer than a detection distance D_{R2} of the right infrared camera 26R. For example, the emitting distance D_{R1} is 20 m, and the detection distance D_{R2} is 15 m. Further, an emitting range S_{R1} of the infrared rays emitted from the right infrared emitting unit 22R and a detection range S_{R2} of the right infrared camera 26R may overlap each other, and the emitting range S_{R1} is larger than the detection range S_{R2}. Thus, the right infrared camera 26R can reliably capture an object (another vehicle, a pedestrian, and the like) existing in the detection range S_{R2} of the right infrared camera 26R. In other words, the vehicle 1 can reliably specify the surrounding environment information within the detection range S_{R2} of the right infrared camera 26R based on the infrared image data acquired by the right infrared camera 26R. An upper limit value of an emitting angle of the infrared rays emitted from the right infrared emitting unit 22R with respect to a horizontal direction may be about 10°.

Further, the right infrared camera 26R and the right visible light camera 27R may be configured integrally or may be configured separately. In a case where the right infrared camera 26R and the right visible light camera 27R are configured integrally, a color filter array (CFA) in which RGB color filters and infrared filters are arranged in an array may be used in the right camera 23R. When the right infrared camera 26R and the right visible light camera 27R are configured integrally, the number of devices constituting the right infrared camera module 6R can be reduced.

The control unit 21R is configured to control an operation of the right infrared emitting unit 22R and operations of the right infrared camera 26R and the right visible light camera 27R. The control unit 21R includes a computer system (for example, a SoC) including one or more processors and one or more memories, and an electronic circuit including a passive element and an active element such as a transistor. The processor includes at least one of a CPU, an MPU, a GPU, and a TPU. The memory includes a ROM and a RAM. Further, the computer system may be configured with a non-von Neumann computer such as an ASIC or an FPGA.

For example, in a case where it is determined that a traveling environment of the vehicle 1 is bright based on illuminance data acquired from an illuminance sensor (not illustrated) mounted on the vehicle 1 (specifically, in a case where measured illuminance is larger than threshold illuminance), the control unit 21R may operate only the right visible light camera 27R in the right camera 23R. Meanwhile, in a case where it is determined that the traveling environment of the vehicle 1 is dark based on the illuminance data (specifically, in a case where the measured illuminance is equal to or less than the threshold illuminance), the control unit 21R may operate only the right infrared camera 26R in the right camera 23R. In this way, the surrounding environment information in the right side region of the vehicle 1 can be specified without depending on the brightness of the traveling environment of the vehicle 1.

The right infrared camera module 6R may be disposed on the right rear pillar (for example, a right D-pillar) other than the right C-pillar 50R. In the present embodiment, the right infrared camera system is configured as the right infrared camera module 6R, but the present embodiment is not limited thereto. In this regard, the right infrared camera system may not be packaged as one module. In this case, a configuration of the right infrared camera system is not particularly limited as long as the right infrared emitting unit 22R and the right infrared camera 26R are disposed on the right rear pillar (for example, the right C-pillar 50R) of the vehicle 1. Further, the control unit 21R may be configured integrally with the control unit 21L and/or the vehicle control unit 3.

The HMI 8 includes an input unit that receives an input operation from the driver, and an output unit that outputs the traveling information and the like to the driver. The input unit includes a steering wheel, an accelerator pedal, a brake pedal, a driving mode changeover switch that switches a driving mode of the vehicle 1, and the like. The output unit is a display (for example, a head up display (HUD)) that displays various types of traveling information. The GPS 9 is configured to acquire current position information of the vehicle 1 and output the acquired current position information to the vehicle control unit 3.

The wireless communication unit 10 is configured to receive information (for example, traveling information) related to other vehicles around the vehicle 1 from other vehicles and transmit information (for example, the traveling information) related to the vehicle 1 to other vehicles (inter-vehicle communication). The wireless communication unit 10 is configured to receive infrastructure information from infrastructure equipment such as a traffic light or a marker lamp and transmit the traveling information of the vehicle 1 to the infrastructure equipment (road-vehicle communication). The wireless communication unit 10 is configured to receive information related to a pedestrian from a portable electronic device (a smart phone, a tablet, a wearable device or the like) carried by the pedestrian and transmit the own vehicle traveling information related to the vehicle 1 to the portable electronic device (pedestrian-vehicle communication). The vehicle 1 may directly communicate with other vehicles, the infrastructure equipment or the portable electronic device in an ad-hoc mode, or may perform communication via a communication network such as the Internet.

The storage device 11 is an external storage device such as a hard disk drive (HDD) or a solid state drive (SSD). The storage device 11 may store two-dimensional or three-dimensional map information and/or the vehicle control program. For example, the three-dimensional map information may be configured with the 3D mapping data (the point cloud data). The storage device 11 is configured to output the map information and the vehicle control program to the vehicle control unit 3 in response to a request from the vehicle control unit 3. The map information and the vehicle control program may be updated via the wireless communication unit 10 and the communication network.

When the vehicle 1 travels in an automatic driving mode, the vehicle control unit 3 automatically generates at least one of a steering control signal, an accelerator control signal, and a brake control signal based on traveling state information, the surrounding environment information, the current position information, the map information, and the like. The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and controls the accelerator device 17 based on the received accelerator control signal. In this way, the vehicle control unit 3 automatically controls traveling of the vehicle 1 based on the traveling state information, the surrounding environment information, the current position information, the map information, and the like. That is, in the automatic driving mode, the traveling of the vehicle 1 is automatically controlled by the vehicle system 2.

On the other hand, when the vehicle 1 travels in a manual driving mode, the vehicle control unit 3 generates the steering control signal, the accelerator control signal and the brake control signal according to a manual operation of the driver on the accelerator pedal, the brake pedal and the steering wheel. In this way, in the manual driving mode, since the steering control signal, the accelerator control signal and the brake control signal are generated by the manual operation of the driver, the traveling of the vehicle 1 is controlled by the driver.

Next, the driving mode of the vehicle 1 will be described. The driving mode includes an automatic driving mode and a manual driving mode. The automatic driving mode includes a fully automatic driving mode, an advanced driving support mode, and a driving support mode. In the fully automatic driving mode, the vehicle system 2 automatically executes all kinds of traveling control including steering control, brake control, and accelerator control, and the driver cannot drive the vehicle 1. In the advanced driving support mode, the vehicle system 2 automatically executes all kinds of traveling control including the steering control, the brake control, and the accelerator control, and the driver can drive the vehicle 1 but does not drive the vehicle 1. In the driving support mode, the vehicle system 2 automatically executes a part of traveling control including the steering control, the brake control, and the accelerator control, and the driver drives the vehicle 1 under the driving support of the vehicle system 2. Meanwhile, in the manual driving mode, the vehicle system 2 does not automatically perform the traveling control, and the driver drives the vehicle 1 without the driving support of the vehicle system 2.

The driving mode of the vehicle 1 may be switched by operating the driving mode changeover switch. In this case, the vehicle control unit 3 switches the driving mode of the vehicle 1 among the four driving modes (the fully automatic driving mode, the advanced driving support mode, the driving support mode, and the manual driving mode) according to an operation of the driver on the driving mode changeover switch. The driving mode of the vehicle 1 may be automatically switched based on information about a travelling allowable section where an automatic driving vehicle can travel or a traveling prohibited section where traveling of an automatic driving vehicle is prohibited, or information about an external weather condition. In this case, the vehicle control unit 3 switches the driving mode of the vehicle 1 based on the information described above. Further, the driving mode of the vehicle 1 may be automatically switched by using a seating sensor, a face orientation sensor, and the like. In this case, the vehicle control unit 3 switches the driving mode of the vehicle 1 based on an output signal from the seating sensor or the face orientation sensor.

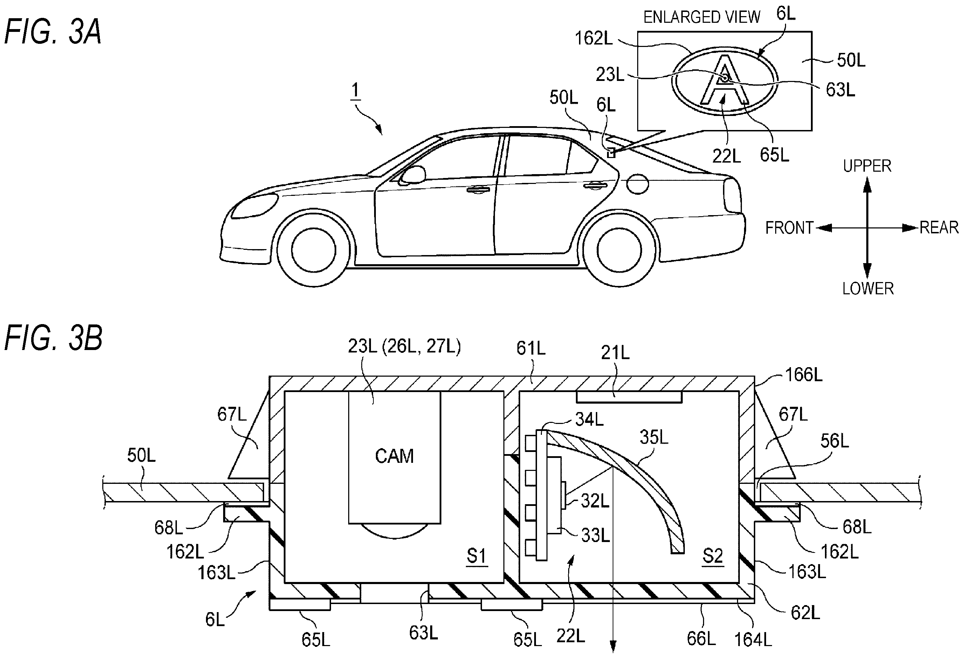

Next, a specific structure of the left infrared camera module 6L will be described below with reference to FIGS. 3A and 3B. FIG. 3A shows a side view of the vehicle 1 and an enlarged front view of the left infrared camera module 6L. FIG. 3B shows a cross-sectional view of the left infrared camera module 6L.

As shown in FIGS. 3A and 3B, the left infrared camera module 6L is mounted at a predetermined position of the left C-pillar 50L of the vehicle 1. In particular, the left infrared camera module 6L is fitted into a through hole 56L formed at a predetermined position of the left C-pillar 50L. The left infrared camera module 6L includes the left camera 23L including the left infrared camera 26L and the left visible light camera 27L, the left infrared emitting unit 22L, the control unit 21L, a housing 61L having an opening portion, and a cover 62L covering the opening portion of the housing 61L. In this figure, the left infrared camera 26L and the left visible light camera 27L are configured integrally.

The left camera 23L, the left infrared emitting unit 22L, and the control unit 21L are disposed in a space formed by the housing 61L and the cover 62L. Specifically, the space formed by the housing 61L and the cover 62L includes a first space S1 and a second space S2 separated from the first space S1. The left camera 23L is disposed in the first space S1, while the left infrared emitting unit 22L and the control unit 21L are disposed in the second space S2. According to the above configuration, since the first space S1 and the second space S2 are separated from each other, the infrared rays emitted from the left infrared emitting unit 22L can be suitably prevented from directly entering the left infrared camera 26L. In this way, the reliability of the infrared image data acquired by the left infrared camera 26L can be improved.

The left infrared emitting unit 22L includes a heat sink 34L, a sub-mount 33L disposed on the heat sink 34L, an infrared light source 32L disposed on the sub-mount 33L, and a reflector 35L disposed on the heat sink 34L. The heat sink 34L is configured to release heat generated by the infrared light source 32L toward an outside. That is, the heat generated by the infrared light source 32L is released into air in the second space S2 via the sub-mount 33L and the heat sink 34L.

The infrared light source 32L is configured with, for example, an infrared LED configured to emit infrared rays. The reflector 35L is configured to reflect the infrared rays emitted from the infrared light source 32L toward the outside. The reflector 35L is configured as, for example, a parabolic reflector. In this case, the infrared light source 32L may be disposed near a focal point of the reflector 35L, and the infrared rays emitted from the infrared light source 32L may be converted into substantially parallel light by the reflector 35L.

The control unit 21L is disposed in the second space S2, but the disposing position of the control unit 21L is not particularly limited. For example, the control unit 21L may be disposed outside the left infrared camera module 6L. In particular, the control unit 21L may be disposed at a predetermined position of the vehicle 1.

The housing 61L includes a pair of lances 67L provided on an outer surface 166L of the housing 61L. The cover 62L functions as, for example, an infrared transmission filter that transmits infrared rays (in particular, near-infrared rays). Therefore, the cover 62L is configured to transmit infrared rays (near-infrared rays) emitted from the left infrared emitting unit 22L, and is configured not to transmit visible light having a wavelength of at least 600 nm or less. Further, a color of the cover 62L is recognized as black from the outside of the vehicle 1. The cover 62L has a through hole 63L at a position facing the left camera 23L. In a case where the left camera 23L is configured only by the left infrared camera 26L, the through hole 63L may not be formed in the cover 62L. Further, in a case where the left infrared camera 26L and the left visible light camera 27L are separated from each other, the through hole 63L or a visible light transmission filter may be formed at a position facing the left visible light camera 27L.

The cover 62L includes a flange portion 162L protruding outward from an outer surface 163L of the cover 62L. A sheet packing 68L is provided between the flange portion 162L and the left C-pillar 50L. Further, an emblem 65L of the vehicle 1 is formed on an outer surface 164L of the cover 62L. In this regard, in a case where light in a red wavelength band is contained in the infrared rays (near-infrared rays) emitted from the left infrared emitting unit 22L, an occupant of another vehicle, a pedestrian and the like existing outside the vehicle 1 recognizes the emitted infrared rays as reddish light. Meanwhile, the pedestrian and the like pays more attention to the emblem 65L than to the infrared rays (reddish light) emitted from the left infrared emitting unit 22L. Therefore, the emblem 65L can suitably prevent the pedestrian and the like from feeling a great sense of discomfort with respect to the infrared rays (reddish light). In the present embodiment, "A " is shown as an example of a shape of the emblem 65L, but the shape of the emblem 65L is not particularly limited.

A coating layer 66L is formed on the outer surface 164L. The coating layer 66L may be a water-repellent coating layer or a hydrophilic coating layer. In a case where the coating layer 66L is a water-repellent coating layer, water droplets can be suitably prevented from adhering to the outer surface 164L of the cover 62L. Therefore, since the water droplets are suitably prevented from being reflected on the left camera 23L, the reliability of the image data acquired by the left camera 23L can be improved. Meanwhile, in a case where the coating layer 66L is a hydrophilic coating layer, formation of water spots on the outer surface 164L of the cover 62L is suitably prevented. Therefore, since the water spots are suitably prevented from being reflected on the left camera 23L, the reliability of the image data acquired by the left camera 23L can be improved.

Although only the specific structure of the left infrared camera module 6L has been described in the present embodiment, the right infrared camera module 6R also has a similar configuration as the left infrared camera module 6L. That is, the right infrared camera module 6R is fitted into a through hole formed at a predetermined position of the right C-pillar 50R of the vehicle 1. The right infrared camera module 6R includes the right camera 23R including the right infrared camera 26R and the right visible light camera 27R, the right infrared emitting unit 22R, the control unit 21R, a housing (not shown) having an opening portion, and a cover (not shown) covering the opening portion of the housing. Further, the right infrared camera module 6R includes an emblem (not shown) of the vehicle 1 formed on an outer surface of the cover and a coating layer (not shown) formed on the outer surface of the cover. The right infrared emitting unit 22R has a similar configuration as the left infrared emitting unit 22L shown in FIGS. 3A and 3B.

As described above, according to the present embodiment, even when the traveling environment of the vehicle 1 is dark, the surrounding environment in the left side region of the vehicle 1 can be detected using the left infrared camera 26L mounted on the left C-pillar 50L of the vehicle 1, and the surrounding environment in the right side region of the vehicle 1 can be detected using the right infrared camera 26R mounted on the right C-pillar 50R of the vehicle 1. Further, since the infrared rays rather than the visible light are emitted to the outside as light for the infrared camera, a situation in which a great sense of discomfort is given to other vehicles, pedestrians, and the like existing outside the vehicle 1 can be prevented. In this way, the surrounding environment in the lateral region (the left side region and the right side region) of the vehicle 1 can be detected without giving a great sense of discomfort to other vehicles, pedestrians, and the like.

Further, since the left infrared camera module 6L (in particular, the left camera 23L) is mounted on the left C-pillar 50L, dirt is less likely to adhere to the left camera 23L. Therefore, it is not necessary to separately provide a cleaner device for cleaning the left camera 23L, so that the manufacturing cost of the left infrared camera module 6L can be reduced. Further, since the left camera 23L is less likely to be defective due to the adhesion of dirt, the reliability of the left camera 23L can be improved.

Similarly to the above, since the right infrared camera module 6L (in particular, the right camera 23R) is mounted on the right C-pillar 50R, dirt is less likely to adhere to the right camera 23R. Therefore, it is not necessary to separately provide a cleaner device for cleaning the right camera 23R, so that the manufacturing cost of the right infrared camera module 6R can be reduced. Further, since the right camera 23R is less likely to be defective due to the adhesion of dirt, the reliability of the right camera 23R can be improved.

In the present embodiment, the left infrared emitting unit 22L, the left camera 23L, and the control unit 21L are housed in a space formed by the housing 61L and the cover 62L, and the left infrared camera system is packaged as one module. Therefore, the left infrared camera module 6L can be easily attached to the vehicle 1.

### (Turn-Off Control of Left Infrared Emitting Unit)

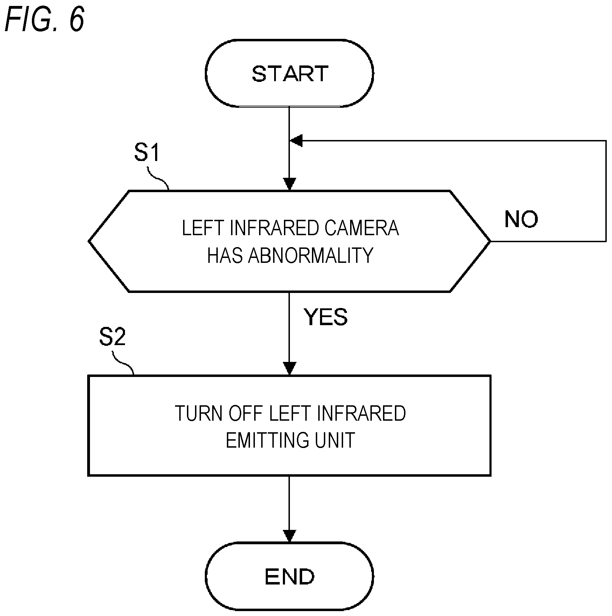

Next, a process of turning off the left infrared emitting unit 22L in response to an abnormality of the left infrared camera 26L will be described below with reference to FIGS. 2 and 6. FIG. 6 is a flowchart illustrating a process of turning off the left infrared emitting unit 22L in response to an abnormality of the left infrared camera 26L. As a precondition, it is assumed that the left infrared emitting unit 22L is turned on when the left infrared camera 26L is in operation.

As shown in FIG. 6, in step S1, the control unit 21L determines whether the left infrared camera 26L has an abnormality. For example, the control unit 21L may determine that the left infrared camera 26L has an abnormality when the left infrared camera 26L is not driven. In particular, the control unit 21L may determine that the left infrared camera 26L has an abnormality, for example, when the infrared image data cannot be acquired from the left infrared camera 26L due to dirt, damage, and the like of the lens of the left infrared camera 26L.

The control unit 21L may determine that the left infrared camera 26L has an abnormality when the surrounding environment information in the left side region cannot be specified at all based on the infrared image data acquired from the left infrared camera 26L. Alternatively, when the vehicle control unit 3 cannot specify the surrounding environment information in the left side region at all based on the infrared image data acquired from the left infrared camera 26L, the vehicle control unit 3 may transmit an abnormality signal indicating an abnormality of the left infrared camera 26L to the control unit 21L. The control unit 21L may determine that the left infrared camera 26L has an abnormality based on the received abnormality signal.

When the determination result of step S1 is YES, the control unit 21L turns off the left infrared emitting unit 22L (step S2). When the determination result of step S1 is NO, the control unit 21L executes the determination process of step S1 again.

In the present description, only the turn-off control of the left infrared emitting unit 22L corresponding to the abnormality of the left infrared camera 26L is described, but the control unit 21R is configured to turn off the right infrared emitting unit 22R in response to the abnormality of the right infrared camera 26R by a similar method as described above. Further, the operation of the left infrared camera 26L (or the right infrared camera 26R) may be stopped in response to an abnormality of the left infrared camera 26L (or the right infrared camera 26R).

In general, when the vehicle 1 is traveling in the automatic driving mode, the surrounding environment information of the vehicle 1 is specified using detection data from various sensors. Specifically, the vehicle control unit 3 specifies the surrounding environment information in the front region of the vehicle 1 based on the 3D mapping data from the LiDAR unit 41 and the image data from the camera 42. Further, the vehicle control unit 3 specifies the surrounding environment information in the rear region of the vehicle 1 based on the 3D mapping data from the LiDAR unit 51 and the image data from the camera 52. The vehicle control unit 3 (or the control unit 21L) specifies the surrounding environment information in the left side region based on the image data from the left camera 23L. Further, the vehicle control unit 3 (or the control unit 21R) specifies the surrounding environment information in the right side region based on the image data from the right camera 23R. In this way, when the vehicle 1 is traveling in the automatic driving mode, power consumption consumed by the vehicle 1 is dramatically increased.

In this regard, in the present embodiment, when the left infrared camera 26L has an abnormality, the left infrared emitting unit 22L is turned off. When the right infrared camera 26R has an abnormality, the right infrared emitting unit 22R is turned off. Therefore, wasteful power consumption of the left infrared emitting unit 22L or the right infrared emitting unit 22R can be prevented, and power consumption of the whole vehicle 1 can be reduced.

### (Process of Setting Intensity of Infrared Rays corresponding to Speed Limit of Road)

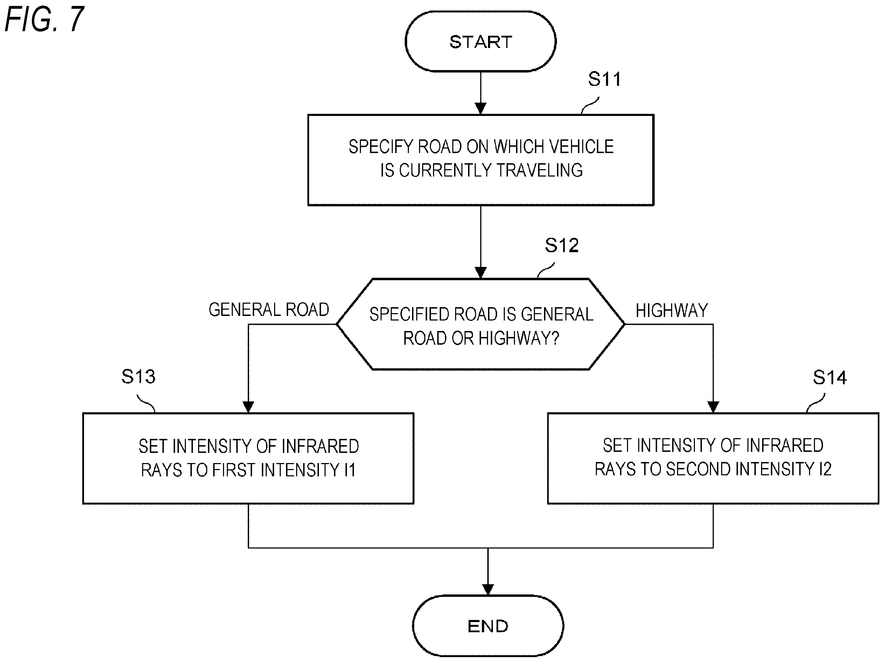

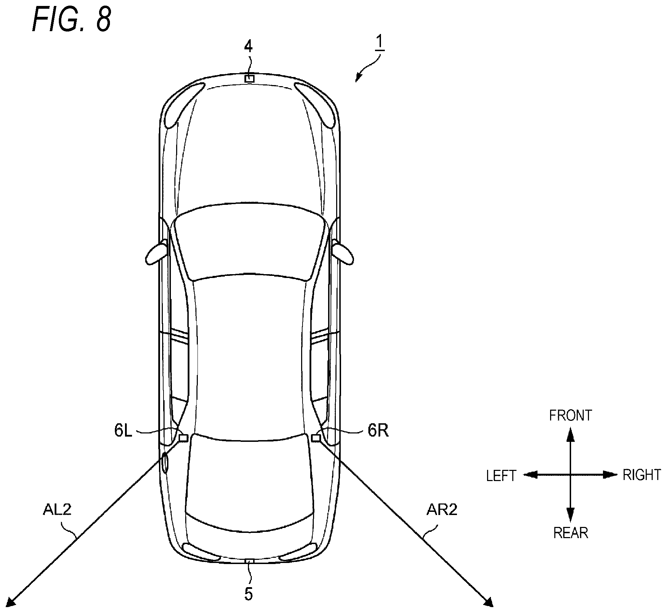

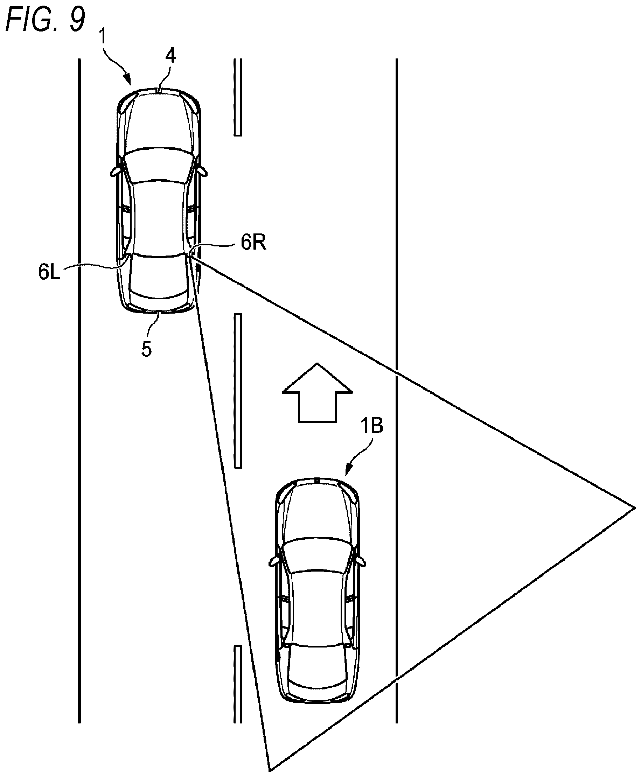

Next, a process of setting an intensity of the infrared rays emitted from the left infrared emitting unit 22L and the right infrared emitting unit 22R according to a road on which the vehicle 1 is currently traveling will be described below with reference to FIGS. 7 to 9. FIG. 7 is a flowchart illustrating a process of setting an intensity of infrared rays according to a road on which the vehicle 1 is currently traveling (in particular, a general road or a highway). FIG. 8 is a diagram showing an optical axis AL2 of the left infrared camera 26L that is directed to a left rear direction of the vehicle 1 and an optical axis AR2 of the right infrared camera 26R that is directed to a right rear direction of the vehicle 1. FIG. 9 is a diagram showing the vehicle 1 and another vehicle 1B that suddenly approaches the vehicle 1 from behind.

As shown in FIG. 7, in step S11, the vehicle control unit 3 (see FIG. 2) specifies a road on which the vehicle 1 is currently traveling. Specifically, the vehicle control unit 3 may specify the road on which the vehicle 1 is currently traveling based on the current position information of the vehicle 1 acquired from the GPS 9 and the two-dimensional or three-dimensional map information stored in the storage device 11. Next, the vehicle control unit 3 determines whether the specified road is a general road or a highway (step S12). Here, the "general road" refers to a road whose speed limit is a first speed. The first speed is, for example, 60 km/h. The "highway" refers to a road whose speed limit is a second speed higher than the first speed. The second speed is, for example, 100 km/h or 120 km/h. Thus, it should be noted that the "general road" and the "highway" are roads determined based on the speed limit.

Next, when the vehicle control unit 3 determines that the specified road is a general road, the vehicle control unit 3 transmits a first control signal for setting an intensity of the infrared rays to a first intensity I1 to each of the control units 21L and 21R. Thereafter, the control unit 21L sets, based on the first control signal transmitted from the vehicle control unit 3, an intensity of the infrared rays emitted from the left infrared emitting unit 22L to the first intensity I1. Further, the control unit 21R sets, based on the first control signal transmitted from the vehicle control unit 3, an intensity of the infrared rays emitted from the right infrared emitting unit 22R to the first intensity I1 (step S13).

Next, when the vehicle control unit 3 determines that the specified road is a highway, the vehicle control unit 3 transmits a second control signal for setting an intensity of the infrared rays to a second intensity I2 larger than the first intensity I1 to each of the control units 21L and 21R. Thereafter, the control unit 21L sets, based on the second control signal transmitted from the vehicle control unit 3, the intensity of the infrared rays emitted from the left infrared emitting unit 22L to the second intensity I2 (>I1). Further, the control unit 21R sets, based on the second control signal transmitted from the vehicle control unit 3, the intensity of the infrared rays emitted from the right infrared emitting unit 22R to the second intensity I2 (step S14). In this way, when the vehicle 1 is traveling on a highway, the intensity of the infrared rays emitted from the left infrared emitting unit 22L is increased. Therefore, the left infrared camera 26L can reliably detect the surrounding environment in the detection range of the left infrared camera 26L while the vehicle 1 is traveling on a highway. Similarly, when the vehicle 1 is traveling on a highway, the intensity of the infrared rays emitted from the right infrared emitting unit 22R is increased. Therefore, the right infrared camera 26R can reliably detect the surrounding environment in the detection range of the right infrared camera 26R while the vehicle 1 is traveling on a highway. The series of processes shown in FIG. 7 may be repeatedly executed at a predetermined cycle.

Next, it is assumed that the vehicle 1 enters a highway from a general road. In this case, before the vehicle 1 enters the highway, the intensity of the infrared rays emitted from the left infrared emitting unit 22L is set to the first intensity I1, and the intensity of the infrared rays emitted from the right infrared emitting unit 22R is also set to the first intensity I1. After the vehicle 1 enters the highway, the intensity of the infrared rays emitted from the left infrared emitting unit 22L is changed from the first intensity I1 to the second intensity I2 through the series of processes shown in FIG. 7. Similarly, the intensity of the infrared rays emitted from the right infrared emitting unit 22R is changed from the first intensity I1 to the second intensity 12. In this way, when the vehicle 1 enters the highway from the general road, the intensity of the infrared rays emitted from the left infrared emitting unit 22L and the right infrared emitting unit 22R is increased. Therefore, the vehicle 1 can reliably detect an object such as another vehicle that suddenly approaches the vehicle 1 while the vehicle 1 is traveling on a highway.

In particular, as shown in FIG. 8, it is assumed that the optical axis AL2 of the left infrared camera 26L is directed to the left rear direction of the vehicle 1 and the optical axis AR2 of the right infrared camera 26R is directed to the right rear direction of the vehicle 1. That is, the left infrared camera 26L is configured to detect the surrounding environment in a left rear region of the vehicle 1, and the right infrared camera 26R is configured to detect the surrounding environment in a right rear region of the vehicle 1. In this case, as shown in FIG. 9, the other vehicle 1B suddenly approaching the vehicle 1 from behind can be reliably detected in response to the increase in the intensity of the infrared rays emitted from the right infrared emitting unit 22R.

### (Process of Setting Intensity of Infrared Rays According to Traveling Speed)

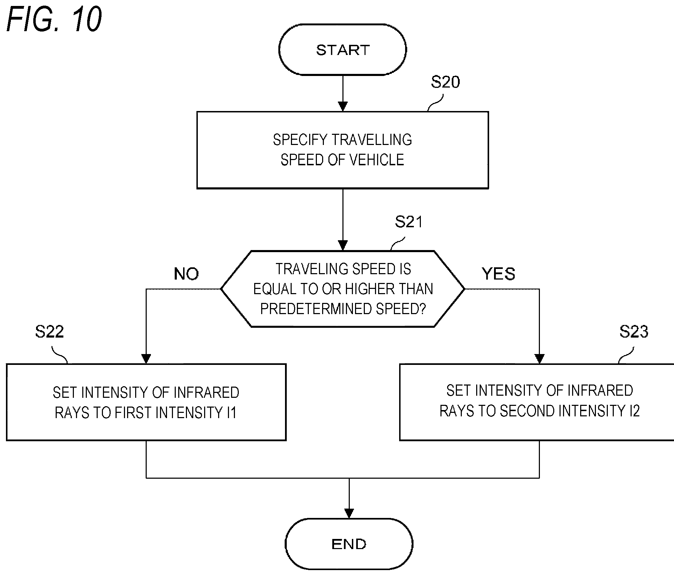

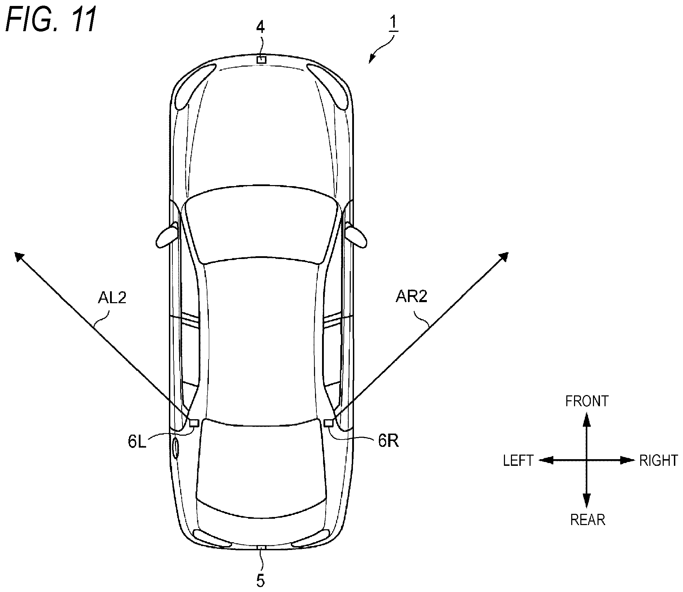

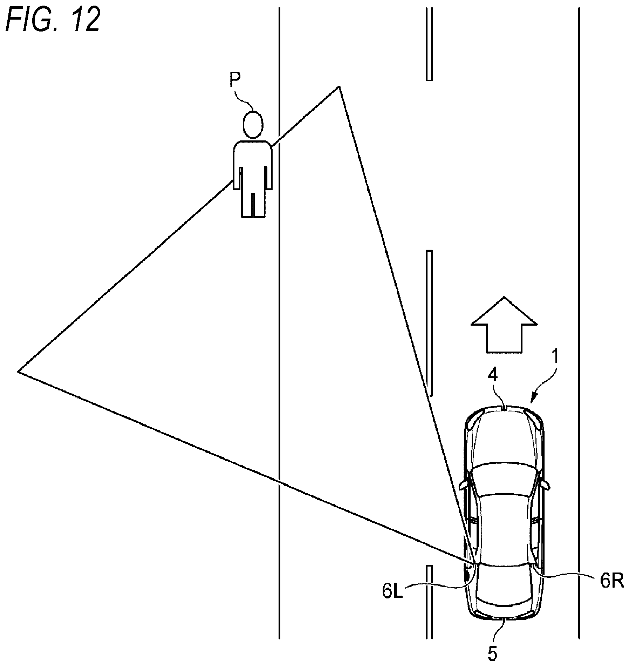

Next, a process of setting the intensity of the infrared rays emitted from the left infrared emitting unit 22L and the right infrared emitting unit 22R according to a traveling speed of the vehicle 1 will be described below with reference to FIGS. 10 to 12. FIG. 10 is a flowchart illustrating a process of setting an intensity of the infrared rays according to a traveling speed of the vehicle 1. FIG. 11 is a diagram showing an optical axis AL2 of the left infrared camera that is directed to a left front direction of the vehicle 1 and an optical axis AR2 of the right infrared camera that is directed to a right front direction of the vehicle 1. FIG. 12 is a diagram showing the vehicle 1 and a pedestrian P in front of the vehicle who suddenly approaches the vehicle 1.

As shown in FIG. 10, in step S20, the vehicle control unit 3 (see FIG. 2) acquires information related to the traveling speed of the vehicle 1 from a speed sensor (not shown) configured to detect the traveling speed of the vehicle 1. Next, the vehicle control unit 3 determines whether the traveling speed of the vehicle 1 is equal to or higher than a predetermined speed (step S21). Here, the predetermined speed is, for example, 60 km/h.

Thereafter, when the vehicle control unit 3 determines that the traveling speed of the vehicle 1 is not equal to or higher than the predetermined speed (that is, lower than the predetermined speed) (NO in step S21), the vehicle control unit 3 transmits the first control signal for setting the intensity of the infrared rays to the first intensity I1 to each of the control units 21L and 21R. Thereafter, the control unit 21L sets, based on the first control signal transmitted from the vehicle control unit 3, an intensity of the infrared rays emitted from the left infrared emitting unit 22L to the first intensity I1. Further, the control unit 21R sets, based on the first control signal transmitted from the vehicle control unit 3, the intensity of the infrared rays emitted from the right infrared emitting unit 22R to the first intensity I1 (step S22).

On the other hand, when the vehicle control unit 3 determines that the traveling speed of the vehicle 1 is equal to or higher than the predetermined speed (YES in step S21), the vehicle control unit 3 transmits the second control signal for setting the intensity of the infrared rays to the second intensity I2 higher than the first intensity I1 to each of the control units 21L and 21R. Thereafter, the control unit 21L sets, based on the second control signal transmitted from the vehicle control unit 3, the intensity of the infrared rays emitted from the left infrared emitting unit 22L to the second intensity I2 (>I1). Further, the control unit 21R sets, based on the second control signal transmitted from the vehicle control unit 3, the intensity of the infrared rays emitted from the right infrared emitting unit 22R to the second intensity I2 (step S23).

In this way, when the traveling speed of the vehicle 1 is equal to or higher than the predetermined speed, the intensity of the infrared rays emitted from the left infrared emitting unit 22L is increased. Therefore, the left infrared camera 26L can reliably detect the surrounding environment in the detection range of the left infrared camera 26L when the traveling speed of the vehicle 1 is equal to or higher than the predetermined speed. Similarly, when the traveling speed of the vehicle 1 is equal to or higher than the predetermined speed, the intensity of the infrared rays emitted from the right infrared emitting unit 22R is increased. Therefore, the right infrared camera 26R can reliably detect the surrounding environment in the detection range of the right infrared camera 26R when the traveling speed of the vehicle 1 is equal to or higher than the predetermined speed. The series of processes shown in FIG. 10 may be repeatedly executed at a predetermined cycle.

In particular, as shown in FIG. 11, it is assumed that the optical axis AL2 of the left infrared camera 26L is directed to a left front direction of the vehicle 1 and the optical axis AR2 of the right infrared camera 26R is directed to a right front direction of the vehicle 1. That is, the left infrared camera 26L is configured to detect a surrounding environment in a left front region of the vehicle 1, and the right infrared camera 26R is configured to detect the surrounding environment in a right front region of the vehicle 1. In this case, as shown in FIG. 12, the pedestrian P and the like suddenly approaching the vehicle 1 from front can be reliably detected in response to the increase in the intensity of the infrared rays emitted from the left infrared emitting unit 22L.

In the present example, when it is determined that the traveling speed of the vehicle 1 is equal to or higher than the predetermined speed, the intensity of the infrared rays is set to the second intensity 12, but the present embodiment is not limited thereto. For example, the intensity of the infrared rays may be linearly changed according to the traveling speed of the vehicle 1.

### (Second Embodiment)

Hereinafter, a second embodiment of the present invention (hereinafter, referred to as the present embodiment) will be described with reference to the drawings. Dimensions of members shown in the drawings may be different from actual dimensions of the members for convenience of description. Members having the same reference numerals as those of the members already described in the first embodiment will not be described repeatedly.

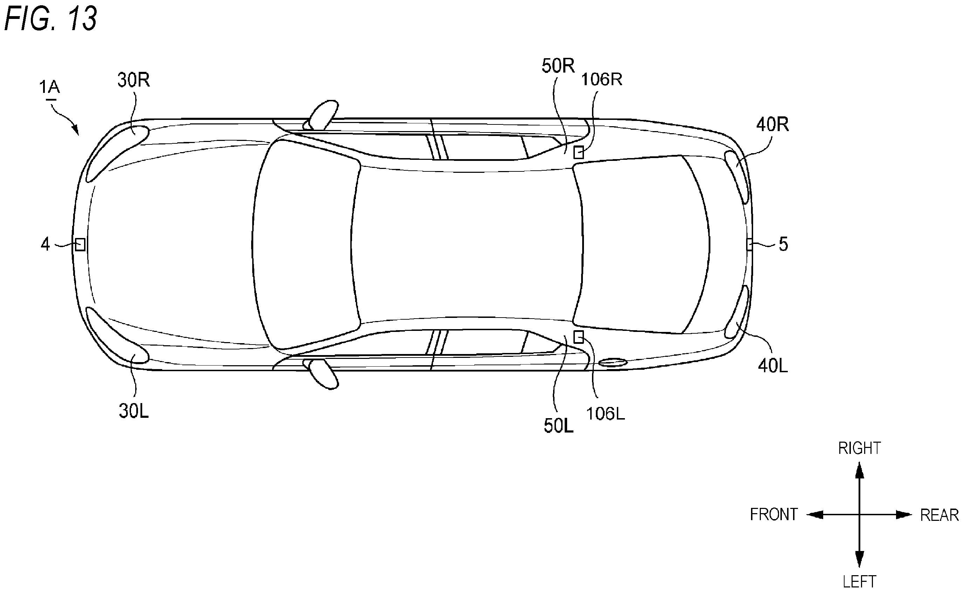

In description of the present embodiment, a "left-right direction", an "upper-lower direction" and a "front-rear direction" may be appropriately referred to, for convenience of description. These directions are relative directions set for a vehicle 1A shown in FIG. 13. Here, the "left-right direction" is a direction including a "left direction" and a "right direction". The "upper-lower direction" is a direction including an "upper direction" and a "lower direction". The "front-rear direction" is a direction including a "front direction" and a "rear direction". Although not shown in FIG. 13, the upper-lower direction is a direction orthogonal to the left-right direction and the front-rear direction.

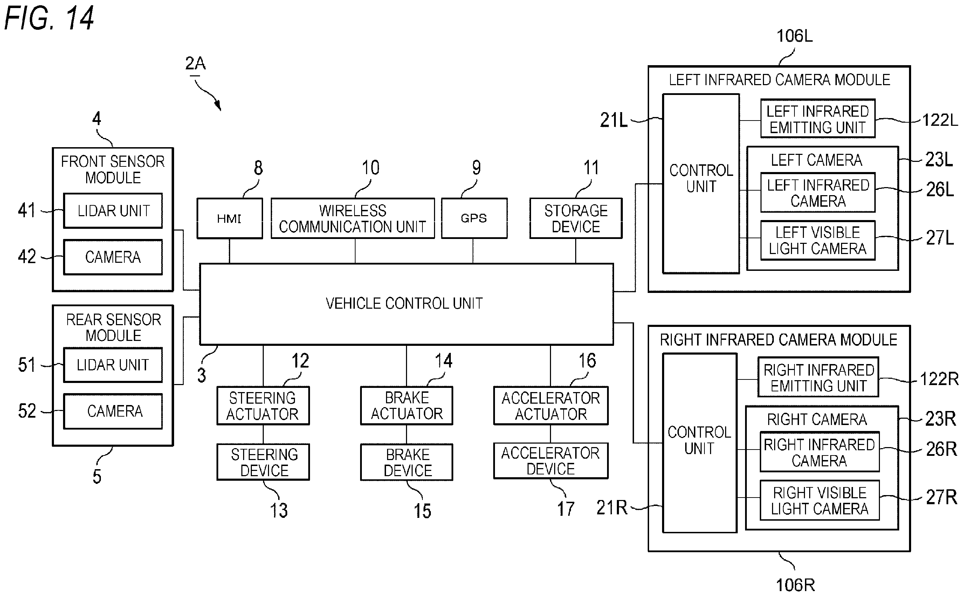

First, a vehicle system 2A according to the present embodiment will be described below with reference to FIGS. 13 and 14. FIG. 13 is a top view of the vehicle 1A provided with the vehicle system 2A. FIG. 14 is a block diagram of the vehicle system 2A. The vehicle 1A is a vehicle (automobile) that can travel in an automatic driving mode.

As shown in FIG. 14, the vehicle system 2A includes the vehicle control unit 3, the front sensor module 4, the rear sensor module 5, a left infrared camera module 106L, and a right infrared camera module 106R. Further, the vehicle system 2A includes the HMI 8, the GPS 9, the wireless communication unit 10 and the storage device 11. Further, the vehicle system 2A includes the steering actuator 12, the steering device 13, the brake actuator 14, the brake device 15, the accelerator actuator 16 and the accelerator device 17.

The left infrared camera module 106L (an example of a left infrared camera system) is mounted on the left C-pillar 50L (an example of a left rear pillar) of the vehicle 1A, and includes a left infrared emitting unit 122L, the left camera 23L, and the control unit 21L. The left camera 23L includes the left infrared camera 26L and the left visible light camera 27L.

The left infrared emitting unit 122L is configured to emit infrared laser (in particular, near-infrared laser) toward a left side region of the vehicle 1A. A central wavelength of the infrared laser emitted from the left infrared emitting unit 122L is, for example, in a range of 700 nm to 2500 nm. In this regard, the central wavelength of the infrared laser is, for example, 850 nm, 940 nm, or 1050 nm.

The control unit 21L is configured to control an operation of the left infrared emitting unit 122L and operations of the left infrared camera 26L and the left visible light camera 27L.

The right infrared camera module 106R (an example of a right infrared camera system) is mounted on the right C-pillar 50R (an example of a right rear pillar) of the vehicle 1A, and includes a right infrared emitting unit 122R, the right camera 23R, and the control unit 21R. The right camera 23R includes the right infrared camera 26R and the right visible light camera 27R.

The right infrared emitting unit 122R is configured to emit infrared laser (near-infrared laser) toward a right side region of the vehicle 1A. A central wavelength of the infrared laser emitted from the right infrared emitting unit 122R is, for example, in a range of 700 nm to 2500 nm. In this regard, the central wavelength of the infrared laser is, for example, 850 nm, 940 nm, or 1050 nm.

The control unit 21R is configured to control an operation of the right infrared emitting unit 122R and operations of the right infrared camera 26R and the right visible light camera 27R.

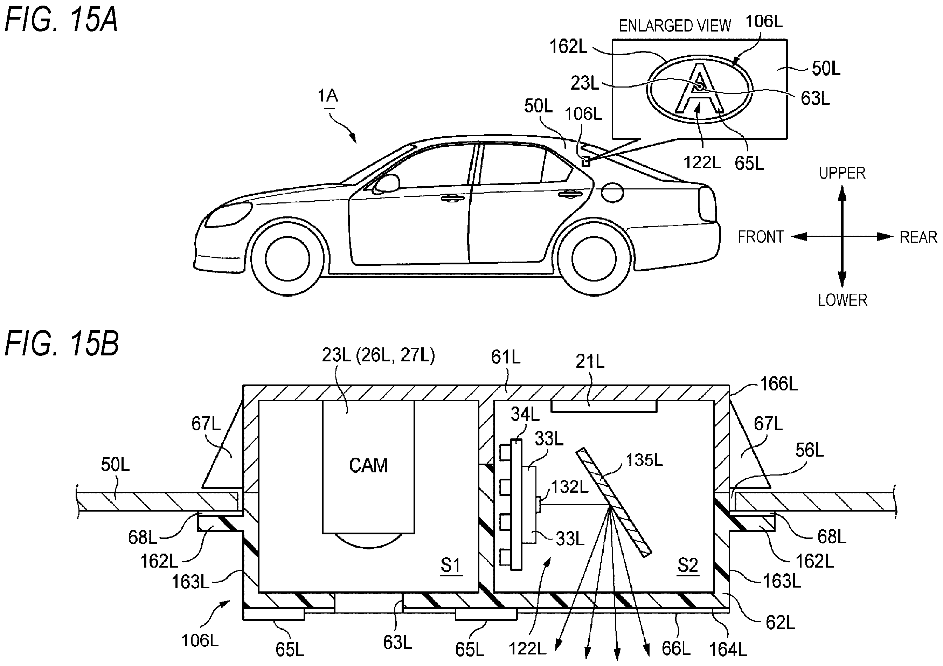

Next, a specific structure of the left infrared camera module 106L will be described below with reference to FIGS. 15A and 15B. FIG. 15A shows a side view of the vehicle 1A and an enlarged front view of the left infrared camera module 106L. FIG. 15B shows a cross-sectional view of the left infrared camera module 106L. In the first embodiment, an infrared LED is used as a light source of the left infrared emitting unit, but in the second embodiment, an infrared laser is used as a light source of the left infrared emitting unit. The second embodiment and the first embodiment are mainly different from each other in the light source of the infrared emitting unit.

As shown in FIGS. 15A and 15B, the left infrared camera module 106L is mounted at a predetermined position of the left C-pillar 50L of the vehicle 1A. In particular, the left infrared camera module 106L is fitted into a through hole 56L formed at a predetermined position of the left C-pillar 50L. The left infrared camera module 106L includes the left camera 23L including the left infrared camera 26L and the left visible light camera 27L, the left infrared emitting unit 122L, the control unit 21L, the housing 61L having an opening portion, and the cover 62L covering the opening portion of the housing 61L. In this figure, the left infrared camera 26L and the left visible light camera 27L are configured integrally.

The left camera 23L, the left infrared emitting unit 122L, and the control unit 21L are disposed in a space formed by the housing 61L and the cover 62L. Specifically, the space formed by the housing 61L and the cover 62L includes a first space S1 and a second space S2 separated from the first space S1. The left camera 23L is disposed in the first space S1, while the left infrared emitting unit 122L and the control unit 21L are disposed in the second space S2. According to the above configuration, since the first space S1 and the second space S2 are separated from each other, the infrared laser emitted from the left infrared emitting unit 122L can be suitably prevented from directly entering the left infrared camera 26L. In this way, the reliability of the infrared image data acquired by the left infrared camera 26L can be improved.

The left infrared emitting unit 122L includes the heat sink 34L, the sub-mount 33L disposed on the heat sink 34L, an infrared light source 132L disposed on the sub-mount 33L, and a diffusion reflector 135L (an example of an optical member) disposed on the heat sink 34L. The heat sink 34L is configured to release heat generated by the infrared light source 132L toward the outside. That is, the heat generated by the infrared light source 132L is released into air in the second space S2 via the sub-mount 33L and the heat sink 34L.

The infrared light source 132L is configured with, for example, an infrared laser diode (LD) configured to emit infrared laser. The diffusion reflector 135L is configured to diffuse and reflect the infrared laser emitted from the infrared light source 132L toward the outside.

The control unit 21L is disposed in the second space S2, but the disposing position of the control unit 21L is not particularly limited. For example, the control unit 21L may be disposed outside the left infrared camera module 106L. In particular, the control unit 21L may be disposed at a predetermined position of the vehicle 1A.

The housing 61L includes a pair of lances 67L provided on an outer surface 166L of the housing 61L. The cover 62L functions as, for example, an infrared transmission filter that transmits infrared rays (in particular, near-infrared rays). Therefore, the cover 62L is configured to transmit infrared laser (near-infrared laser) emitted from the left infrared emitting unit 122L, and is configured not to transmit visible light having a wavelength of at least 600 nm or less. Further, a color of the cover 62L is recognized as black from the outside of the vehicle 1A by a pedestrian and the like existing outside the vehicle 1A. The cover 62L has a through hole 63L at a position facing the left camera 23L. In a case where the left camera 23L is configured only by the left infrared camera 26L, the through hole 63L may not be formed in the cover 62L. Further, in a case where the left infrared camera 26L and the left visible light camera 27L are separated from each other, the through hole 63L or a visible light transmission filter may be formed at a position facing the left visible light camera 27L.

Although only the specific structure of the left infrared camera module 106L has been described in the present embodiment, the right infrared camera module 106R also has a similar configuration as the left infrared camera module 106L. That is, the right infrared camera module 106R is fitted into a through hole formed at a predetermined position of the right C-pillar 50R of the vehicle 1A. The right infrared camera module 106R includes the right camera 23R including the right infrared camera 26R and the right visible light camera 27R, the right infrared emitting unit 122R, the control unit 21R, a housing (not shown) having an opening portion, and a cover (not shown) covering the opening portion of the housing. Further, the right infrared camera module 106R includes an emblem (not shown) of the vehicle 1A formed on an outer surface of the cover and a coating layer (not shown) formed on the outer surface of the cover. The right infrared emitting unit 122R has a similar configuration as the left infrared emitting unit 122L shown in FIGS. 15A and 15B.

As described above, according to the present embodiment, even when the traveling environment of the vehicle 1A is dark, the surrounding environment in the left side region of the vehicle 1A can be detected using the left infrared camera 26L mounted on the left C-pillar 50L of the vehicle 1A, and the surrounding environment in the right side region of the vehicle 1A can be detected using the right infrared camera 26R mounted on the right C-pillar 50R of the vehicle 1A. Further, since the infrared laser rather than the visible light is emitted toward the outside as light for the infrared camera, a situation in which a great sense of discomfort is given to other vehicles, pedestrians, and the like existing outside the vehicle 1A can be prevented. In this way, the surrounding environment in the lateral region (the left side region and the right side region) of the vehicle 1A can be detected without giving a great sense of discomfort to other vehicles, pedestrians, and the like.

In particular, in the case where an infrared LED is employed as the infrared light source 132L, light in a red wavelength band is contained in the infrared rays, so that an occupant of another vehicle, a pedestrian and the like existing outside the vehicle 1A may recognize the emitted infrared rays as reddish light. Meanwhile, in the present embodiment, since the infrared LD is employed as the infrared light source 132L, the infrared laser emitted from the infrared LD does not include light in the red wavelength band at all. As described above, since the pedestrian and the like does not recognize the emitted infrared laser as reddish light, the pedestrian and the like can be suitably prevented from feeling a great sense of discomfort with respect to the left infrared emitting unit 122L and the right infrared emitting unit 122R.

In the present embodiment, the left infrared emitting unit 122L, the left camera 23L, and the control unit 21L are housed in a space formed by the housing 61L and the cover 62L, and the left infrared camera system is packaged as one module. Therefore, the left infrared camera module 106L can be easily attached to the vehicle 1A.

### (Modification of Second Embodiment)

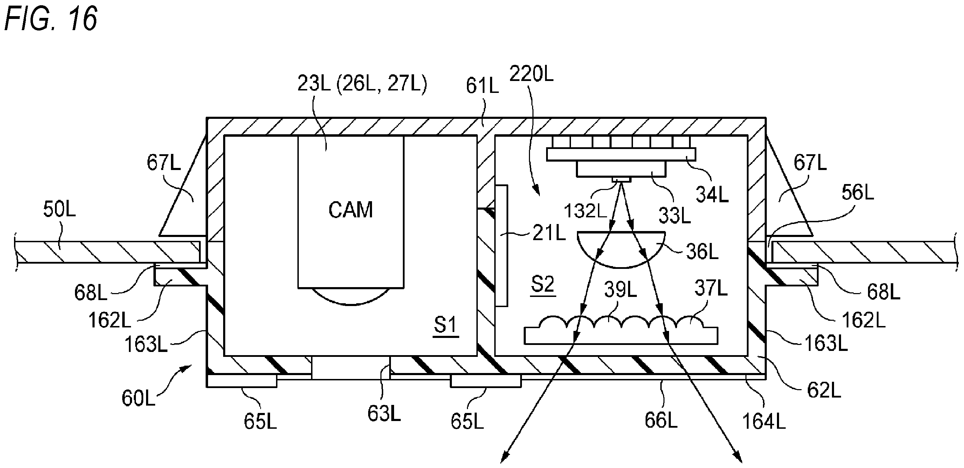

Next, a left infrared camera module 60L according to a modification will be described below with reference to FIG. 16. FIG. 16 is a cross-sectional view of the left infrared camera module 60L according to the modification. The left infrared camera module 60L shown in FIG. 16 is different from the left infrared camera module 106L shown in FIGS. 15A and 15B in that a left infrared emitting unit 220L is provided. In the following description, only the left infrared emitting unit 220L will be described.

As shown in FIG. 16, the left infrared emitting unit 220L includes the heat sink 34L, the sub-mount 33L disposed on the heat sink 34L, the infrared light source 132L disposed on the sub-mount 33L, a diffusion lens 37L having a plurality of steps 39L and a projection lens 36L disposed between the infrared light source 132L and the diffusion lens 37L. A combination of the diffusion lens 37L and the projection lens 36L functions as an optical member configured to diffuse infrared laser emitted from the infrared light source 132L toward the outside.

The infrared laser emitted from the infrared light source 132L is incident on the projection lens 36L and then refracted by the projection lens 36L. Thereafter, the infrared laser transmitted through the projection lens 36L is diffused by the diffusion lens 37L and then emitted toward the outside. In this way, an emitting range of the infrared laser can be adjusted by the diffusion lens 37L and the projection lens 36L.

Although only the modification of the left infrared camera module has been described in the present example, the right infrared camera module may be modified in the similar manner as described above. That is, the right infrared emitting unit may also include a heat sink, a sub-mount, an infrared light source disposed on the sub-mount, a diffusion lens having a plurality of steps, and a projection lens disposed between the infrared light source and the diffusion lens.

Although the embodiment of the present invention has been described above, it is needless to say that the technical scope of the present invention should not be limitedly interpreted by the description of the present embodiment. It is to be understood by those skilled in the art that the present embodiment is merely an example and various modifications may be made within the scope of the invention described in the claims. The technical scope of the present invention should be determined based on the scope of the invention described in the claims and an equivalent scope thereof.

In the present embodiment, a driving mode of the vehicle is described as including the fully automatic driving mode, the advanced driving support mode, the driving support mode and the manual driving mode, but the driving mode of the vehicle should not be limited to these four modes. A classification of the driving mode of the vehicle may be appropriately changed according to laws or regulations related to automatic driving in each country. Similarly, definitions of the "fully automatic driving mode", the "advanced driving support mode" and the "driving support mode" in the description of the present embodiment are merely examples and may be appropriately changed according to the laws or regulations related to the automatic driving in each country.

The present application appropriately uses contents disclosed in Japanese Patent Application No. 2018-213868 filed on Nov. 14, 2018, contents disclosed in Japanese Patent Application No. 2018-213869 filed on Nov. 14, 2018, contents disclosed in Japanese Patent Application No. 2018-213870 filed on Nov. 14, 2018, contents disclosed in Japanese Patent Application No. 2018-213871 filed on Nov. 14, 2018, contents disclosed in Japanese Patent Application No. 2018-213872 filed on Nov. 14, 2018, contents disclosed in Japanese Patent Application No. 2018-213873 filed on Nov. 14, 2018, and contents disclosed in Japanese Patent Application No. 2018-213874 filed on Nov. 14, 2018.

## Claims

1. An infrared camera system provided in a vehicle, comprising:
an infrared emitting unit configured to emit infrared rays toward an outside; and
an infrared camera configured to acquire infrared image data indicating a surrounding environment of the vehicle,
wherein the infrared emitting unit and the infrared camera are mounted on a rear pillar of the vehicle.

2. The infrared camera system according to claim 1, wherein the infrared emitting unit and the infrared camera are mounted on a C-pillar of the vehicle.

3. The infrared camera system according to claim 1 or 2, wherein an optical axis of the infrared emitting unit and an optical axis of the infrared camera are substantially parallel to each other.

4. The infrared camera system according to any one of claims 1 to 3, further comprising a visible light camera configured to acquire visible light image data indicating a surrounding environment of the vehicle.

5. The infrared camera system according to claim 4, wherein the visible light camera and the infrared camera are configured integrally.

6. The infrared camera system according to any one of claims 1 to 5,
wherein the infrared emitting unit induces:
a left infrared emitting unit mounted on a left rear pillar of the vehicle, and
a right infrared emitting unit mounted on a right rear pillar of the vehicle,
wherein the infrared camera includes:
a left infrared camera mounted on the left rear pillar, and
a right infrared camera mounted on the right rear pillar.

7. A vehicle comprising the infrared camera system according to any one of claims 1 to 6.

8. An infrared camera module provided in a vehicle, comprising:
a housing having an opening portion;
a cover configured to cover the opening portion;
an infrared emitting unit configured to emit infrared rays toward a lateral region of the vehicle;
an infrared camera configured to acquire infrared image data indicating a surrounding environment in the lateral region of the vehicle; and
a control unit configured to control operations of the infrared emitting unit and the infrared camera,
wherein the infrared emitting unit and the infrared camera are disposed in a space formed by the housing and the cover.

9. The infrared camera module according to claim 8, wherein the housing and the cover are disposed on a rear pillar of the vehicle.

10. The infrared camera module according to claim 8 or 9, wherein the control unit is disposed in the space.

11. The infrared camera module according to any one of claims 8 to 10,
wherein the space includes a first space and a second space separated from the first space,
wherein the infrared emitting unit is disposed in the first space, and
wherein the infrared camera is disposed in the second space.

12. The infrared camera module according to any one of claims 8 to 11, wherein a hydrophilic coating layer or a water-repellent coating layer is formed on an outer surface of the cover.

13. An infrared camera module provided in a vehicle, comprising:
an emblem of the vehicle;
an infrared emitting unit configured to emit infrared rays toward a lateral region of the vehicle; and
an infrared camera configured to acquire infrared image data indicating a surrounding environment in the lateral region of the vehicle.

14. The infrared camera module according to claim 13, further comprising:
a housing having an opening portion; and
a cover configured to cover the opening portion,
wherein the infrared emitting unit and the infrared camera are disposed in a space formed by the housing and the cover, and
wherein the emblem is disposed on an outer surface of the cover.

15. The infrared camera module according to claim 14, wherein the housing and the cover are disposed on a rear pillar of the vehicle.

16. The infrared camera module according to claim 14 or 15,
wherein the space includes a first space and a second space separated from the first space,
wherein the infrared emitting unit is disposed in the first space, and
wherein the infrared camera is disposed in the second space.

17. An infrared camera system provided in a vehicle, comprising:
an infrared emitting unit configured to emit infrared rays toward a lateral region of the vehicle; and
an infrared camera configured to acquire infrared image data indicating a surrounding environment in the lateral region of the vehicle;
wherein an emitting distance of infrared rays emitted from the infrared emitting unit is longer than a detection distance of the infrared camera.

18. The infrared camera system according to claim 17, wherein the infrared camera is mounted on a rear pillar of the vehicle.

19. The infrared camera system according to claim 17 or 18,
wherein the infrared emitting unit induces:
a left infrared emitting unit mounted on a left rear pillar of the vehicle, and
a right infrared emitting unit mounted on a right rear pillar of the vehicle,
wherein the infrared camera includes:
a left infrared camera mounted on the left rear pillar, and
a right infrared camera mounted on the right rear pillar,
wherein an emitting distance of infrared rays emitted from the left infrared emitting unit is longer than a detection distance of the left infrared camera, and
wherein an emitting distance of infrared rays emitted from the right infrared emitting unit is longer than a detection distance of the right infrared camera.

20. An infrared camera system provided in a vehicle, comprising:
an infrared emitting unit configured to emit infrared rays toward a lateral region of the vehicle;
an infrared camera configured to acquire infrared image data indicating a surrounding environment in the lateral region of the vehicle; and
a control unit configured to control an operation of the infrared emitting unit,
wherein the control unit is configured to turn off the infrared emitting unit in response to an abnormality of the infrared camera.

21. An infrared camera system provided in a vehicle, comprising:
an infrared emitting unit configured to emit infrared rays toward a lateral region of the vehicle; and
an infrared camera configured to acquire infrared image data indicating a surrounding environment in the lateral region of the vehicle; and
a control unit configured to control an operation of the infrared emitting unit,
wherein the control unit is configured to change, according to a traveling speed of the vehicle or a speed limit of a road on which the vehicle is traveling, an intensity of infrared rays emitted from the infrared emitting unit.

22. The infrared camera system according to claim 21,
wherein the control unit is configured to increase the intensity of the infrared rays emitted from the infrared emitting unit when the vehicle enters a highway from a general road, and
wherein a speed limit of the highway is higher than a speed limit of the general road.

23. The infrared camera system according to claim 22,
wherein the infrared camera includes:
a left infrared camera configured to acquire infrared image data indicating a surrounding environment in a left side region of the vehicle, and
a right infrared camera configured to acquire infrared image data indicating a surrounding environment in a right side region of the vehicle,
wherein an optical axis of the left infrared camera is directed to a left rear direction of the vehicle, and
wherein an optical axis of the right infrared camera is directed to a right rear direction of the vehicle.

24. The infrared camera system according to claim 21,
wherein the control unit is configured to increase the intensity of the infrared rays emitted from the infrared emitting unit when a traveling speed of the vehicle is equal to or higher than a predetermined speed.

25. The infrared camera system according to claim 24,
wherein the infrared camera includes:
a left infrared camera configured to acquire infrared image data indicating a surrounding environment in a left side region of the vehicle, and
a right infrared camera configured to acquire infrared image data indicating a surrounding environment in a right side region of the vehicle,
wherein an optical axis of the left infrared camera is directed to a left front direction of the vehicle, and
wherein an optical axis of the right infrared camera is directed to a right front direction of the vehicle.

26. An infrared camera system provided in a vehicle, comprising:
an infrared emitting unit configured to emit infrared laser toward a lateral region of the vehicle; and
an infrared camera configured to acquire infrared image data indicating a surrounding environment in the lateral region of the vehicle.

27. The infrared camera system according to claim 26, wherein the infrared camera is mounted on a rear pillar of the vehicle.

28. The infrared camera system according to claim 26 or 27,
wherein the infrared emitting unit induces:
an infrared laser light source configured to emit infrared laser, and
an optical member configured to diffuse infrared laser emitted from the infrared laser light source toward an outside.

29. The infrared camera system according to claim 28, wherein the optical member includes a diffusion reflector.

30. The infrared camera system according to claim 28, wherein the optical member includes a diffusion lens having a plurality of steps, and a projection lens disposed between the infrared laser light source and the diffusion lens.

31. A vehicle comprising the infrared camera module according to any one of claims 8 to 16.

32. A vehicle comprising the infrared camera system according to any one of claims 17 to 30.
